(19) Europäisches Patentamt / European Patent Office / Office européen des brevets

(11) **EP 4 693 920 A1**

(12) **EUROPEAN PATENT APPLICATION**
published in accordance with Art. 153(4) EPC

(43) Date of publication:
**11.02.2026 Bulletin 2026/07**

(21) Application number: **23930988.3**

(22) Date of filing: **24.03.2023**

(51) International Patent Classification (IPC):
**H04B 7/0408** (2017.01)  **H04B 7/06** (2006.01)
**H04B 7/08** (2006.01)  **H04W 56/00** (2009.01)
**H04J 11/00** (2006.01)

(52) Cooperative Patent Classification (CPC):
**H04B 7/0408; H04B 7/06; H04B 7/08; H04J 11/00; H04W 56/00**

(86) International application number:
**PCT/KR2023/003951**

(87) International publication number:
**WO 2024/204875 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **LEE, Jongku**
  **Seoul 06772 (KR)**
• **KIM, Kijun**
  **Seoul 06772 (KR)**
• **KIM, Bonghoe**
  **Seoul 06772 (KR)**
• **LEE, Dongsun**
  **Seoul 06772 (KR)**
• **KIM, Byounggill**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR SYNCHRONIZATION SIGNAL BEAMFORMING**

(57)　According to various embodiments of the present disclosure, a method performed by a terminal in a wireless communication system may comprise the steps of: receiving multiple synchronization beam groups (SBGs) from a base station (BS) through at least one of multiple code division beams (CDBs) or synchronization signal (SS) beams corresponding to the multiple SBGs, respectively, wherein each of the multiple SBGs includes one primary SS (PSS), one physical broadcast channel (PBCH), and multiple code division secondary SSs (SSSs); detecting an optimal CDB index corresponding to an optimal CDB from among the multiple CDBs; acquiring an optimal SBG index of an optimal SBG to which the optimal CDB belongs; transmitting the optimal CDB index and the optimal SBG index to the BS; and receiving a signal from the BS through optimized UE-specific beamforming based on the optimal CDB index and the optimal SBG index.

[FIG. 31]

```
                    ┌─────────┐
                    │  Start  │
                    └────┬────┘
                         │
        ┌────────────────────────────────────┐
        │      Receive plurality of SBGs      │──── S3110
        └────────────────┬───────────────────┘
                         │
        ┌────────────────────────────────────┐
        │       Detect optimal CDB index      │──── S3120
        └────────────────┬───────────────────┘
                         │
        ┌────────────────────────────────────┐
        │      Acquire optimal SBG index      │──── S3130
        └────────────────┬───────────────────┘
                         │
        ┌────────────────────────────────────────────┐
        │ Transmit optimal CDB index and optimal SBG  │──── S3140
        │                   index                     │
        └────────────────┬───────────────────────────┘
                         │
        ┌────────────────────────────────────────────┐
        │ Receive signal through UE-specific beamforming │──── S3150
        └────────────────┬───────────────────────────┘
                         │
                    ┌─────────┐
                    │   End   │
                    └─────────┘
```

EP 4 693 920 A1

**Description**

[Technical Field]

The present disclosure relates to a method and a device for synchronization signal beamforming, and particularly, to a method and a device for synchronization signal beamforming in a wireless communication system using a high frequency band.

[Background Art]

Wireless access systems have been widely deployed to provide various types of communication services such as voice and data. In general, the wireless access system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as more and more communication devices require larger communication capacity, an enhanced mobile broadband (eMBB) communication technology is proposed compared to the existing radio access technology (RAT). In addition, massive machine type communications (mMTC), which connect multiple devices and objects to provide various services anytime and anywhere, as well as communication systems that consider reliability and latency-sensitive services/user equipments (UEs) are being proposed. Various technical configurations for this purpose are being proposed.

Meanwhile, when a path loss is severe, such as a TeraHertz (THz) band, an antenna gain may be increased by performing beamforming using a larger number of antennas to overcome the path loss. In general, as the number of antennas used for beamforming increases, a beam width decreases, and thus a larger number of beams are required for beam sweeping.

In a 5G NR system, when a base station uses beam sweeping to transmit SSBs, respective beams are sequentially transmitted at different times. This means that a resource that needs to be used to transmit an SSB increases in proportion to the number of beams. In addition, more search attempts may be required for a UE to detect a synchronization signal, which may cause a problem that a synchronization acquisition delay and power consumption of the UE increase.

[Disclosure]

[Technical Problem]

In order to solve the above-described problem, the present disclosure provides a method and a device for synchronization signal beamforming, which may reduce radio resources required for transmitting and receiving a synchronization signal in a wireless communication system.

In order to solve the above-described problem, the present disclosure provides a method and a device for synchronization signal beamforming, which may reduce synchronization signal discovery time and power consumption of a UE in the wireless communication system.

[Technical Solution]

A method performed by a user equipment (UE) in a wireless communication system according to an embodiment of the present disclosure may comprise receiving a plurality of synchronization beam groups (SBGs) from a base station (BS) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs), detecting an optimal CDB index corresponding to an optimal CDB from among the plurality of CDBs, acquiring an optimal SBG index of an optimal SBG to which the optimal CDB belongs, transmitting the optimal CDB index and the optimal SBG index to the BS, and receiving a signal from the BS through optimized UE-specific beamforming based on the optimal CDB index and the optimal SBG index.

The PSS and the PBCH may be received via one SS beam, and the plurality of respective SSSs may be received via the plurality of respective CDBs.

The PSS, the PBCH, and the plurality of SSSs may be received via the plurality of CDBs.

The detecting of the optimal CDB index corresponding to the optimal CDB from among the plurality of CDBs may comprise obtaining received power of each of the plurality of code division SSSs, and detecting an index of an SSS with a largest received power among the plurality of code division SSSs as the optimal CDB index.

A user equipment (UE) in a wireless communication system according to an embodiment of the present disclosure may comprise one or more transceivers, one or more processors controlling the one or more transceivers, and a memory including one or more instructions performed by the one or more processors, and the one or more instructions may comprise receiving a plurality of synchronization beam groups (SBGs) from a base station (BS) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs), detecting an optimal CDB index corresponding to an optimal CDB from among the plurality of CDBs, acquiring an optimal SBG index of an optimal SBG to which the optimal CDB belongs, transmitting the optimal CDB index and the optimal SBG index to the BS, and receiving a signal from the BS through optimized UE-specific beamforming based on the optimal CDB index and the optimal SBG index.

The PSS and the PBCH may be received via one SS beam, and the plurality of respective SSSs may be received via the plurality of respective CDBs.

The PSS, the PBCH, and the plurality of SSSs may be received via the plurality of CDBs.

The detecting of the optimal CDB index corresponding to the optimal CDB from among the plurality of CDBs may comprise obtaining received power of each of the plurality of code division SSSs, and detecting an index of an SSS with a largest received power among the plurality of code division SSSs as the optimal CDB index.

A method performed by a base station (BS) in a wireless communication system according to an embodiment of the present disclosure may comprise transmitting a plurality of synchronization beam groups (SBGs) to a user equipment (UE) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs), receiving, from the UE, an optimal CDB index corresponding to an optimal CDB among a plurality of CDBs and an optimal SBG index of an optimal SBG to which the optimal CDB belongs, performing optimized UE-specific beamforming based on the optimal CDB index and the optimal SBG index, and transmitting a signal to the UE based on the UE-specific beamforming.

The transmitting of the plurality of SBGs to the UE through at least one of the plurality of CDBs or the SS beams corresponding to the plurality of SBGs, respectively may comprise transmitting the PSS and the PBCH to the UE via one SS beam, and transmitting the plurality of SSSs via the plurality of CDBs.

The transmitting of the PSS and the PBCH to the UE via one SS beam may comprise performing power-boosting for the PSS and the PBCH.

The transmitting of the plurality of SBGs to the UE through at least one of the plurality of CDBs or the SS beams corresponding to the plurality of SBGs, respectively may comprise transmitting the PSS, the PBCH, and the plurality of SSSs via the plurality of CDBs.

A base station (BS) operating in a communication system according to an embodiment of the present disclosure may comprise one or more transceivers, one or more processors controlling the one or more transceivers, and a memory including one or more instructions performed by the one or more processors, and the one or more instructions may comprise transmitting a plurality of synchronization beam groups (SBGs) to a user equipment (UE) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs), receiving, from the UE, an optimal CDB index corresponding to an optimal CDB among a plurality of CDBs and an optimal SBG index of an optimal SBG to which the optimal CDB belongs, performing optimized UE-specific beamforming based on the optimal CDB index and the optimal SBG index, and transmitting a signal to the UE based on the UE-specific beamforming.

The transmitting of the plurality of SBGs to the UE through at least one of the plurality of CDBs or the SS beams corresponding to the plurality of SBGs, respectively may comprise transmitting the PSS and the PBCH to the UE via one SS beam, and transmitting the plurality of SSSs via the plurality of CDBs.

The transmitting of the PSS and the PBCH to the UE via one SS beam may comprise performing power-boosting for the PSS and the PBCH.

The transmitting of the plurality of SBGs to the UE through at least one of the plurality of CDBs or the SS beams corresponding to the plurality of SBGs, respectively may comprise transmitting the PSS, the PBCH, and the plurality of SSSs via the plurality of CDBs.

A first device according to an embodiment of the present disclosure may comprise one or more memories and one or more processors operably connected to the one or more memories, and the first device may operate to receive a plurality of synchronization beam groups (SBGs) from a second device through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs), detect an optimal CDB index corresponding to an optimal CDB from among the plurality of CDBs, acquire an optimal SBG index of an optimal SBG to which the optimal CDB belongs, transmit the optimal CDB index and the optimal SBG index to the second device, and receive a signal from the second device through optimized UE-specific beamforming based on the optimal CDB index and the optimal SBG index.

In one or more non-transitory computer readable media storing one or more instructions according to an embodiment of the present disclosure, the one or more non-transitory computer readable media may operate to receive a plurality of synchronization beam groups (SBGs) from a second device through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs), detect an optimal CDB index corresponding to an optimal CDB from among the plurality of CDBs, acquire an optimal SBG index of an optimal SBG to which the optimal CDB belongs, transmit the optimal CDB index and the optimal SBG index to the second device, and receive a signal from the second device through optimized UE-specific beamforming based on the optimal CDB index and the optimal SBG index.

[Advantageous Effects]

According to the present disclosure, the base station transmits a plurality of code-division synchronization signal beams to the UE at the same time by using the same frequency resource, and the UE may separate the plurality of synchronization signal beams in a code domain to transmit optimal beam information to the base station, so as to form an optimal beam for data transmission and reception while reducing time and frequency resources required for synchronization signal transmission.

According to the present disclosure, the UE can save time and energy for detecting a synchronization signal beam.

[Description of Drawings]

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.

FIG. 2 illustrates an example of a wireless apparatus applicable to the present disclosure.

FIG. 3 illustrates a method of processing a transmitted signal applicable to the present disclosure.

FIG. 4 illustrates another example of a wireless device applicable to the present disclosure.

FIG. 5 illustrates an example of a hand-held device applicable to the present disclosure.

FIG. 6 illustrates physical channels applicable to the present disclosure and a signal transmission method using the same.

FIG. 7 illustrates the structure of a radio frame applicable to the present disclosure.

FIG. 8 illustrates a slot structure applicable to the present disclosure.

FIG. 9 illustrates an example of a communication structure providable in a 6G system applicable to the present disclosure.

FIG. 10 illustrates an example of a structure of a perceptron.

FIG. 11 illustrates an example of a structure of a multilayer perceptron.

FIG. 12 illustrates an example of a deep neural network.

FIG. 13 illustrates an example of a convolutional neural network.

FIG. 14 illustrates an example of a filter operation in a convolutional neural network.

FIG. 15 illustrates an example of a neural network structure in which a circular loop exists.

FIG. 16 illustrates an example of an operation structure of a recurrent neural network.

FIG. 17 illustrates an electromagnetic spectrum applicable to the present disclosure.

FIG. 18 illustrates a THz communication method applicable to the present disclosure.

FIG. 19 illustrates a THz wireless communication transceiver applicable to the present disclosure.

FIG. 20 illustrates a THz signal generation method applicable to the present disclosure.

FIG. 21 illustrates a wireless communication transceiver applicable to the present disclosure.

FIG. 22 illustrates a transmitter structure applicable to the present disclosure.

FIG. 23 illustrates a modulator structure applicable to the present disclosure.

FIG. 24 is a conceptual view showing an example of beam sweeping according to an embodiment of the present disclosure.

FIG. 25 is a flowchart of a data transmission/reception method according to an embodiment of the present disclosure.

FIG. 26 is a conceptual view for describing beamforming according to an embodiment of the present disclosure.

FIG. 27 is a conceptual view for describing a beamforming method according to an embodiment of the present disclosure.

FIG. 28 is a conceptual view for describing beamforming according to another embodiment of the present disclosure.

FIG. 29 is a conceptual view for describing a beamforming method according to another embodiment of the present disclosure.

FIG. 30 is a conceptual view for describing a method for receiving a signal according to an embodiment of the present disclosure.

FIG. 31 is a flowchart of a signal transmission/reception method according to an embodiment of the present disclosure.

FIG. 32 is a flowchart of a signal transmission/reception method according to another embodiment of the present disclosure.

[Mode for Disclosure]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an UpLink (UL). Likewise, the mobile station may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation(5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

## Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/-

description, the same reference numerals may exemplify the same or corresponding hardware blocks, software blocks or functional blocks unless indicated otherwise.

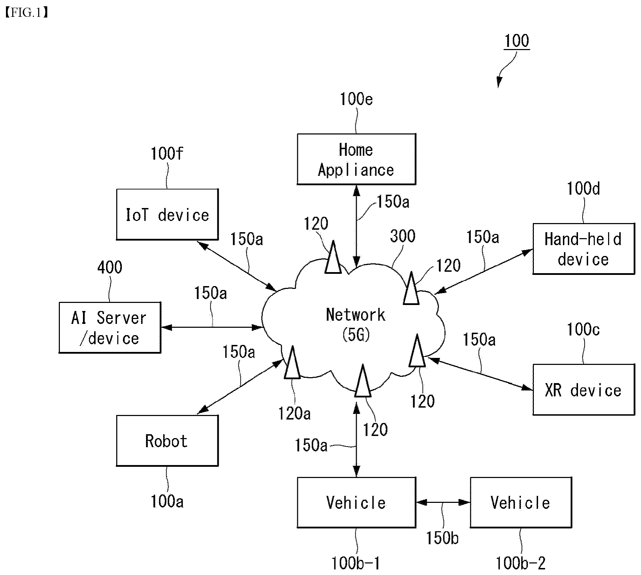

FIG. 1 illustrates an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

## Communication system applicable to the present disclosure

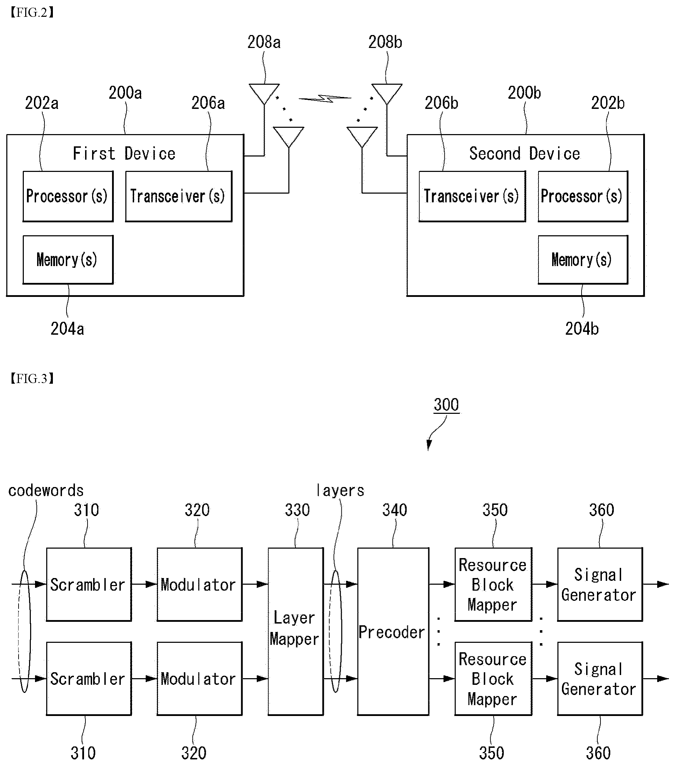

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be connected with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be connected with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be connected with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be connected with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be connected with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be connected with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be connected with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be connected with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

FIG. 3 illustrates a method of processing a transmitted signal applicable to the present disclosure. For example, the transmitted signal may be processed by a signal processing circuit. At this time, a signal processing circuit 300 may include a scrambler 310, a modulator 320, a layer mapper 330, a precoder 340, a resource mapper 350, and a signal generator 360. At this time, for example, the operation/function of FIG. 3 may be performed by the processors 202a and 202b and/or the transceiver 206a and 206b of FIG. 2. In addition, for example, the hardware element of FIG. 3 may be implemented in the processors 202a and 202b of FIG. 2 and/or the transceivers 206a and 206b of FIG. 2. For example, blocks 1010 to 1060 may be implemented in the processors 202a and 202b of FIG. 2. In addition, blocks 310 to 350 may be implemented in the processors 202a and 202b of FIG. 2 and a block 360 may be implemented in the transceivers 206a and 206b of FIG. 2, without being limited to the above-described embodiments.

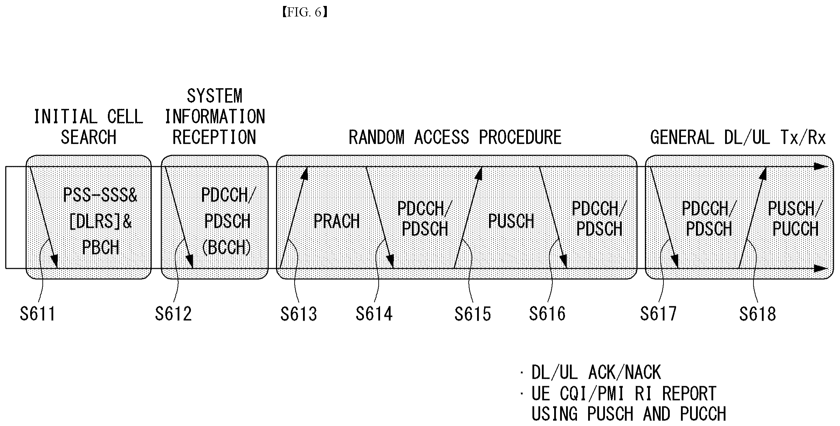

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 6. Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 330. Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

## Structure of wireless device applicable to the present disclosure

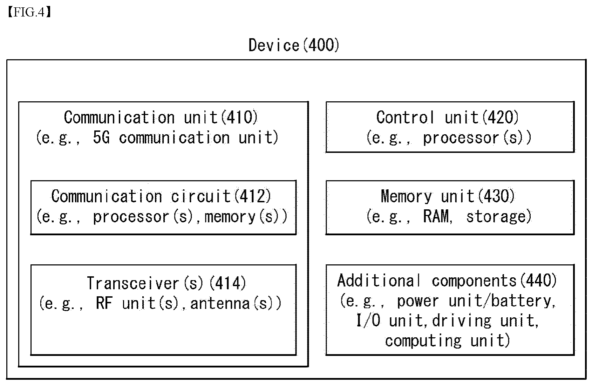

FIG. 4 illustrates another example of a wireless device applicable to the present disclosure.

Referring to FIG. 4, a wireless device 400 may correspond to the wireless devices 200a and 200b of FIG. 2 and include various elements, components, units/portions and/or modules. For example, the wireless device 300 may include a communication unit 410, a control unit (controller) 420, a memory unit (memory) 430 and additional components 440. The communication unit may include a communication circuit 412 and a transceiver(s) 414. For example, the communication circuit 412 may include one or more processors 202a and 202b and/or one or more memories 204a and 204b of FIG. 2. For example, the transceiver(s) 414 may include one or more transceivers 206a and 206b and/or one or more antennas 208a and 208b of FIG. 2. The control unit 420 may be electrically connected with the communication unit 410, the memory unit 430 and the additional components 440 to control overall operation of the wireless device. For example, the control unit 420 may control electrical/mechanical operation of the wireless device based on a program/code/instruction/information stored in the memory unit 430. In addition, the control unit 420 may transmit the information stored in the memory unit 430 to the outside (e.g., another communication device) through the wireless/wired interface using the communication unit 410 over a wireless/wired interface or store information received from the outside (e.g., another communication device) through the wireless/wired interface using the communication unit 410 in the memory unit 430.

The additional components 440 may be variously configured according to the types of the wireless devices. For example, the additional components 440 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 4, various elements, components, units/portions and/or modules in the wireless device 400 may be connected with each other through wired interfaces or at least some thereof may be wirelessly connected through the communication unit 410. For example, in the wireless device 400, the control unit 420 and the communication unit 410 may be connected by wire, and the control unit 420 and the first unit (e.g., 130 or 140) may be wirelessly connected through the communication unit 410. In addition, each element, component, unit/portion and/or module of the wireless device 400 may further include one or more elements. For example, the control unit 420 may be composed of a set of one or more processors. For example, the control unit 420 may be composed of a set of a communication control processor, an application processor, an electronic control unit (ECU), a graphic processing processor, a memory control processor, etc. In another example, the memory unit 430 may be composed of a random access memory (RAM), a dynamic RAM (DRAM), a read only memory (ROM), a flash memory, a volatile memory, a non-volatile memory and/or a combination thereof.

### Hand-held device applicable to the present disclosure

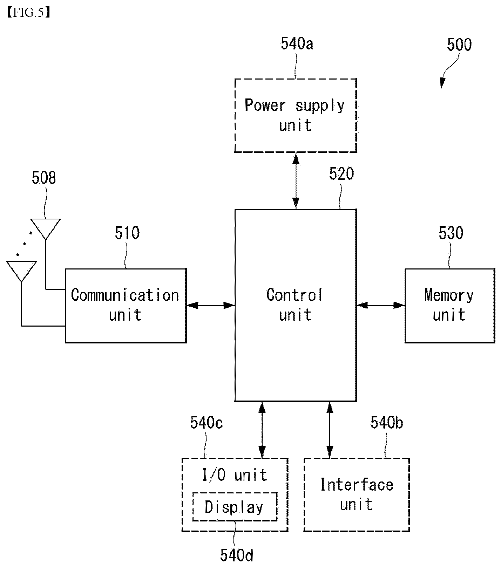

FIG. 5 illustrates an example of a hand-held device applicable to the present disclosure.

FIG. 5 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 5, the hand-held device 400 may include an antenna unit (antenna) 508, a communication unit (transceiver) 510, a control unit (controller) 520, a memory unit (memory) 530, a power supply unit (power supply) 540a, an interface unit (interface) 540b, and an input/output unit 540c. An antenna unit (antenna) 508 may be part of the communication unit 510. The blocks 510 to 530/540a to 540c may correspond to the blocks 410 to 430/440 of FIG. 4, respectively.

The communication unit 510 may transmit and receive signals (e.g., data, control signals, etc.) to and from other wireless devices or base stations. The control unit 520 may control the components of the hand-held device 500 to perform various operations. The control unit 520 may include an application processor (AP). The memory unit 530 may store data/parameters/program/code/instructions necessary to drive the hand-held device 400. In addition, the memory unit 530 may store input/output data/information, etc. The power supply unit 540a may supply power to the hand-held device 500 and include a wired/wireless charging circuit, a battery, etc. The interface unit 540b may support connection between the hand-held device 500 and another external device. The interface unit 540b may include various ports (e.g., an audio input/output port and a video input/output port) for connection with the external device. The input/output unit 540c may receive or output video information/signals, audio information/signals, data and/or user input information. The input/output unit 540c may include a camera, a microphone, a user input unit, a display 540d, a speaker and/or a haptic module.

For example, in case of data communication, the input/output unit 540c may acquire user input information/signal (e.g., touch, text, voice, image or video) from the user and store the user input information/signal in the memory unit 530. The communication unit 510 may convert the information/signal stored in the memory into a radio signal and transmit the converted radio signal to another wireless device directly or transmit the converted radio signal to a base station. In addition, the communication unit 510 may receive a radio signal from another wireless device or the base station and then restore the received radio signal into original information/signal. The restored information/signal may be stored in the memory unit 530 and then output through the input/output unit 540c in various forms (e.g., text, voice, image, video and haptic).

## Physical channels and general signal transmission

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

FIG. 6 illustrates physical channels applicable to the present disclosure and a signal transmission method using the same.

The UE which is turned on again in a state of being turned off or has newly entered a cell performs initial cell search operation in step S611 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intracell broadcast information. Meanwhile, the UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S612, thereby acquiring more detailed system information.

Thereafter, the UE may perform a random access procedure such as steps S613 to S616 in order to complete access to the base station. To this end, the UE may transmit a preamble through a physical random access channel (PRACH) (S613) and receive a random access response (RAR) to the preamble through a physical downlink control channel and a physical downlink shared channel corresponding thereto (S614). The UE may transmit a physical uplink shared channel (PUSCH) using scheduling information in the RAR (S615) and perform a contention resolution procedure such as reception of a physical downlink control channel signal and a physical downlink shared channel signal corresponding thereto (S616).

The UE, which has performed the above-described procedures, may perform reception of a physical downlink control channel signal and/or a physical downlink shared channel signal (S617) and transmission of a physical uplink shared channel (PUSCH) signal and/or a physical uplink control channel (PUCCH) signal (S618) as general uplink/downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

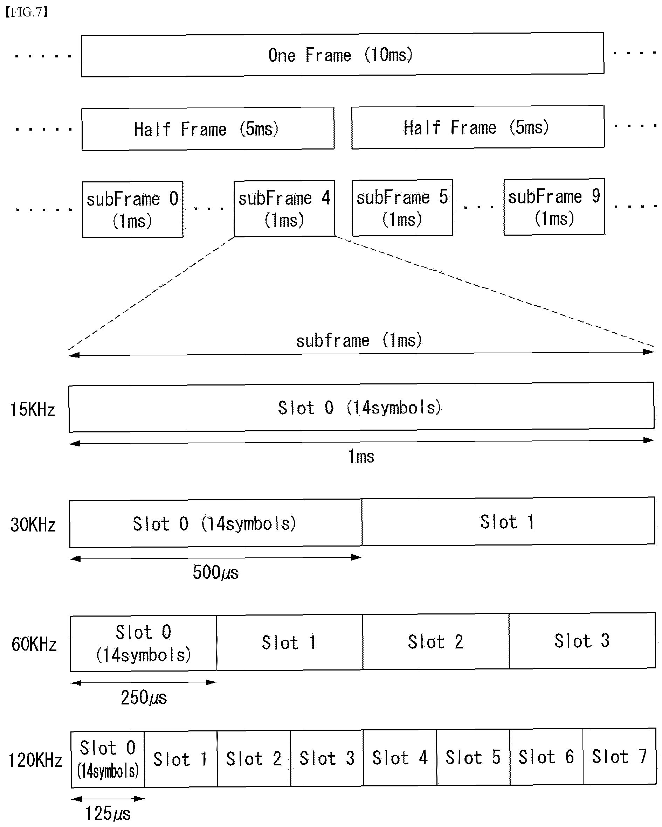

FIG. 7 illustrates the structure of a radio frame applicable to the present disclosure.

UL and DL transmission based on an NR system may be based on the frame shown in FIG. 7. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

【Table 1】

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

【Table 2】

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Tables 1 and 2 above, $N_{symb}^{slot}$ may indicate the number of symbols in a slot, $N_{slot}^{frame,\mu}$ may indicate the number of slots in a frame, and $N_{slot}^{subframe,\mu}$ may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

【Table 3】

| Frequency Range designation | Corresponding frequency range | Subcarrier Spacing |
|---|---|---|
| FR1 | 410MHz – 7125MHz | 15, 30, 60kHz |
| FR2 | 24250MHz – 52600MHz | 60, 120, 240kHz |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments. The THz band will be described below.

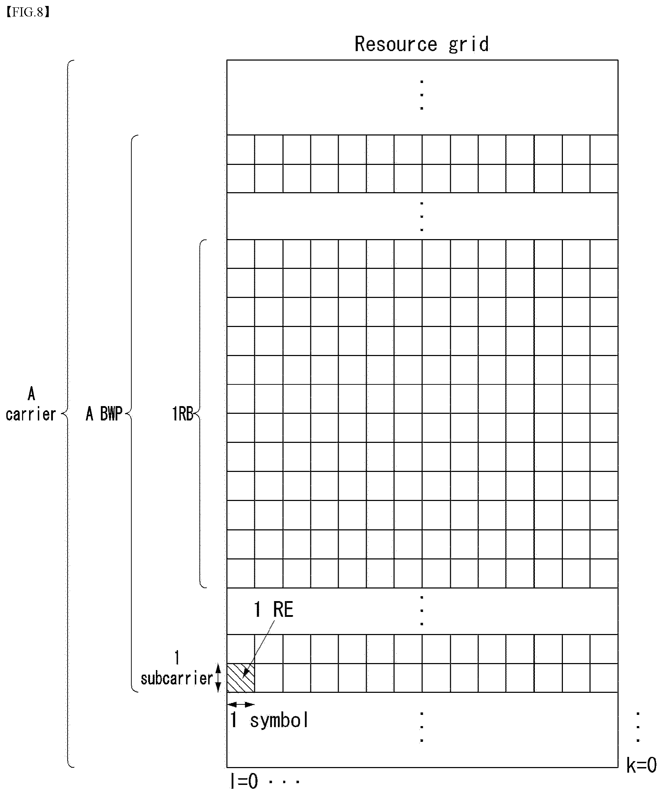

FIG. 8 illustrates a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped.

## 6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

【Table 4】

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

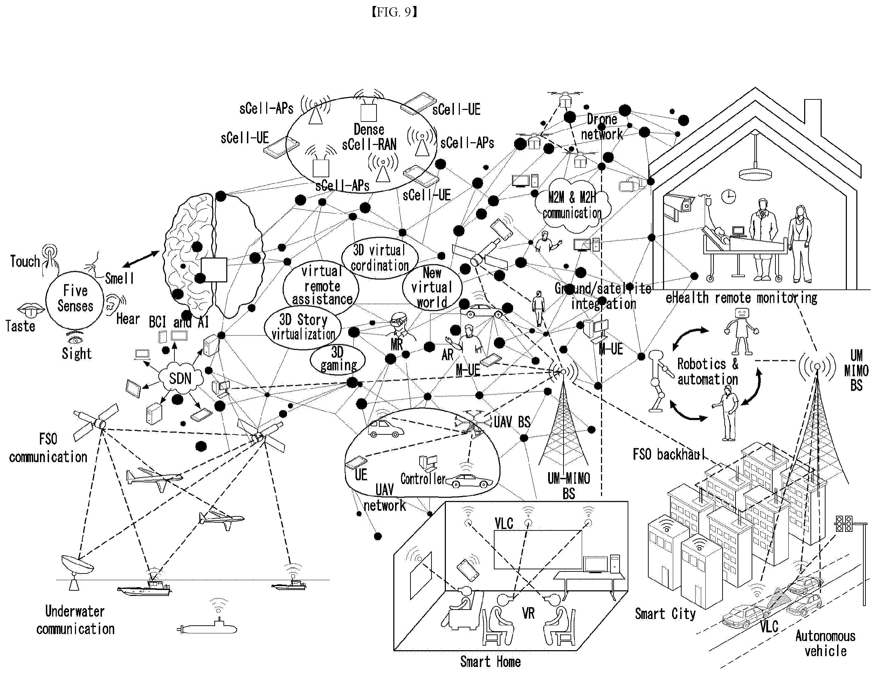

FIG. 9 illustrates an example of a communication structure providable in a 6G system applicable to the present disclosure.

Referring to FIG. 9, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

## Core implementation technology of 6G system

### - Artificial Intelligence (AI)

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field.

However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

However, application of a deep neutral network (DNN) for transmission in the physical layer may have the following problems.

Deep learning-based AI algorithms require a lot of training data in order to optimize training parameters. However, due to limitations in acquiring data in a specific channel environment as training data, a lot of training data is used offline. Static training for training data in a specific channel environment may cause a contradiction between the diversity and dynamic characteristics of a radio channel.

In addition, currently, deep learning mainly targets real signals. However, the signals of the physical layer of wireless communication are complex signals. For matching of the characteristics of a wireless communication signal, studies on a neural network for detecting a complex domain signal are further required.

Hereinafter, machine learning will be described in greater detail.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method and a recurrent Boltzmman machine (RNN) method. Such a learning model is applicable.

An artificial neural network is an example in which multiple perceptrons are connected.

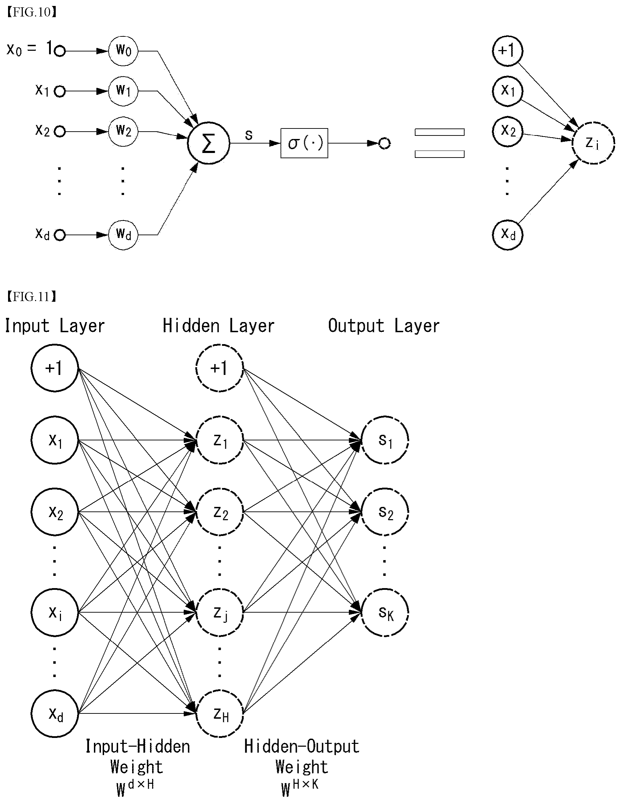

FIG. 10 illustrates an example of a structure of a perceptron.

Referring to FIG. 10, when an input vector x=(x1, x2, ..., xd) is input, each component is multiplied by a weight (W1, W2, ..., Wd), and all the results are summed. After that, the entire process of applying an activation function $\sigma(\cdot)$ is called a perceptron. The huge artificial neural network structure may extend the simplified perceptron structure illustrated in FIG. 10 to apply the input vector to different multidimensional perceptrons. For convenience of explanation, an input value or an output value is referred to as a node.

The perceptron structure illustrated in FIG. 10 may be described as consisting of a total of three layers based on the input value and the output value. FIG. 11 illustrates an artificial neural network in which the number of (d+1) dimensional perceptrons between a first layer and a second layer is H, and the number of (H+1) dimensional perceptrons between the second layer and a third layer is K, by way of example. FIG. 11 illustrates an example of a structure of a multilayer perceptron.

A layer where the input vector is located is called an input layer, a layer where a final output value is located is called an output layer, and all layers located between the input layer and the output layer are called a hidden layer. FIG. 11 illustrates three layers, by way of example. However, since the number of layers of the artificial neural network is counted excluding the input layer, it can be seen as a total of two layers. The artificial neural network is constructed by connecting the perceptrons of a basic block in two dimensions.

The above-described input layer, hidden layer, and output layer can be jointly applied in various artificial neural network structures, such as CNN and RNN to be described later, as well as the multilayer perceptron. The greater the number of hidden layers, the deeper the artificial neural network is, and a machine learning paradigm that uses the sufficiently deep artificial neural network as a learning model is called deep learning. In addition, the artificial neural network used for deep learning is called a deep neural network (DNN).

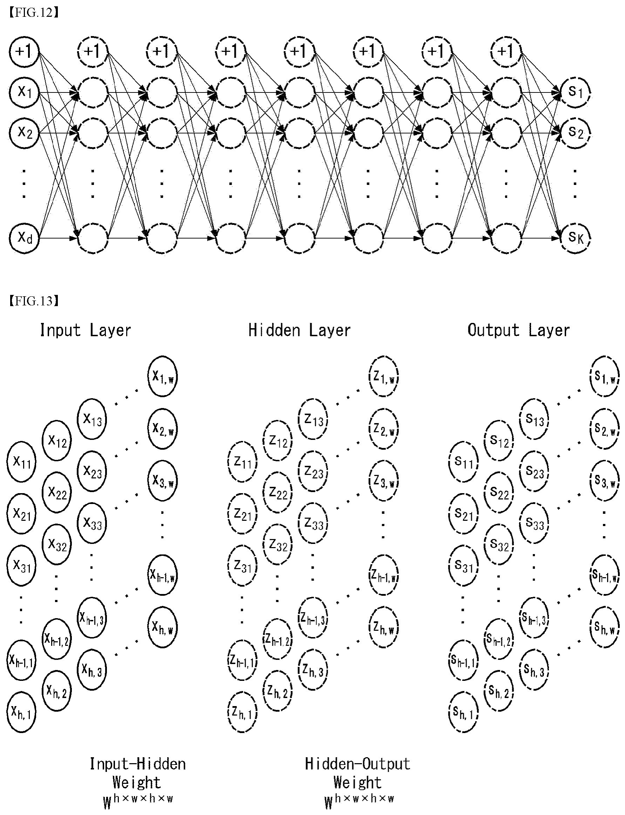

The deep neural network illustrated in FIG. 12 is a multilayer perceptron consisting of eight hidden layers + eight output layers. The multilayer perceptron structure is expressed as a fully connected neural network. In the fully connected neural network, a connection relationship does not exist between nodes located at the same layer, and a connection relationship exists only between nodes located at adjacent layers. The DNN has a fully connected neural network structure and is composed of a combination of multiple hidden layers and activation functions, so it can be usefully applied to understand correlation characteristics between input and output. The correlation characteristic may mean a joint probability of input and output.

Based on how the plurality of perceptrons are connected to each other, various artificial neural network structures different from the above-described DNN can be formed.

In the DNN, nodes located inside one layer are arranged in a one-dimensional longitudinal direction. However, in FIG. 13, it may be assumed that w nodes horizontally and h nodes vertically are arranged in two dimensions (convolutional neural network structure of FIG. 13). In this case, since in a connection process leading from one input node to the hidden layer, a weight is given for each connection, a total of $h \times w$ weights needs to be considered. Since there are $h \times w$ nodes in the input layer, a total of $h^2 w^2$ weights are required between two adjacent layers.

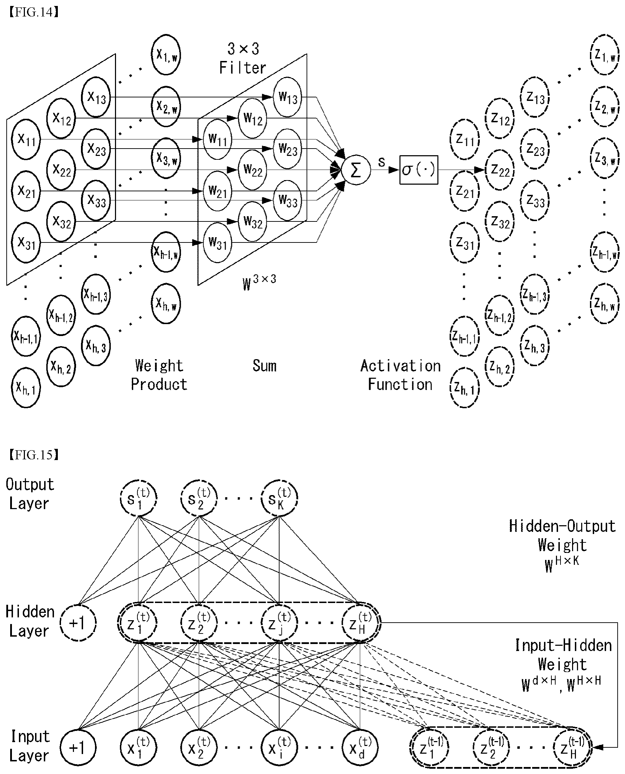

The convolutional neural network of FIG. 13 has a problem in that the number of weights increases exponentially depending on the number of connections. Therefore, instead of considering the connections of all the nodes between adjacent layers, it is assumed that a small-sized filter exists, and a weighted sum and an activation function calculation are performed on an overlap portion of the filters as illustrated in FIG. 14.

One filter has a weight corresponding to the number as much as its size, and learning of the weight may be performed so that a certain feature on an image can be extracted and output as a factor. In FIG. 14, a filter having a size of $3 \times 3$ is applied to the upper leftmost $3 \times 3$ area of the input layer, and an output value obtained by performing a weighted sum and an activation function calculation for a corresponding node is stored in z22.

The filter performs the weighted sum and the activation function calculation while moving horizontally and vertically by a predetermined interval when scanning the input layer, and places the output value at a location of a current filter. This calculation method is similar to the convolution operation on images in the field of computer vision. Thus, a deep neural network with this structure is referred to as a convolutional neural network (CNN), and a hidden layer generated as a result of the convolution operation is referred to as a convolutional layer. In addition, a neural network in which a plurality of convolutional layers exists is referred to as a deep convolutional neural network (DCNN).

At the node where a current filter is located at the convolutional layer, the number of weights may be reduced by calculating a weighted sum including only nodes located in an area covered by the filter. Hence, one filter can be used to focus on features for a local area. Accordingly, the CNN can be effectively applied to image data processing in which a physical distance on the 2D area is an important criterion. In the CNN, a plurality of filters may be applied immediately before the convolution layer, and a plurality of output results may be generated through a convolution operation of each filter.

There may be data whose sequence characteristics are important depending on data attributes. A structure, in which a method of inputting one element on the data sequence at each time step considering a length variability and a relationship of the sequence data and inputting an output vector (hidden vector) of a hidden layer output at a specific time step together with a next element on the data sequence is applied to the artificial neural network, is referred to as a recurrent neural network structure.

FIG. 15 illustrates an example of a neural network structure in which a circular loop exists.

Referring to FIG. 15, a recurrent neural network (RNN) is a structure in which in a process of inputting elements $(x_1(t), x_2(t),..., x_d(t))$ of any line of sight 't' on a data sequence to a fully connected neural network, hidden vectors $(z_1(t-1), z_2(t-1), ..., z_H(t-1))$ are input together at an immediately previous time step (t-1) to apply a weighted sum and an activation function. A reason for transferring the hidden vectors at a next time step is that information within the input vector in previous time steps is considered to be accumulated on the hidden vectors of a current time step.

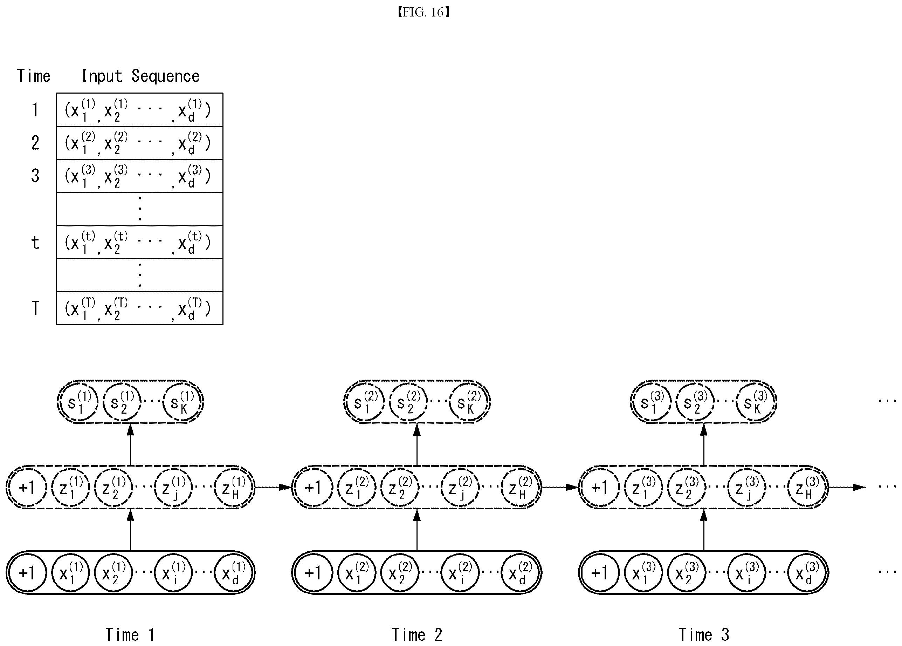

FIG. 16 illustrates an example of an operation structure of a recurrent neural network.

Referring to FIG. 16, the recurrent neural network operates in a predetermined order of time with respect to an input data sequence.

Hidden vectors (z1(1), z2(1), ..., zH(1)) when input vectors (x1(t), x2(t), ..., xd(t)) at a time step 1 are input to the recurrent neural network, are input together with input vectors (x1(2), x2(2), ..., xd(2)) at a time step 2 to determine vectors (z1(2), z2(2), ..., zH(2)) of a hidden layer through a weighted sum and an activation function. This process is repeatedly performed at time steps 2, 3, ..., T.

When a plurality of hidden layers are disposed in the recurrent neural network, this is referred to as a deep recurrent neural network (DRNN). The recurrent neural network is designed to be usefully applied to sequence data (e.g., natural language processing).

A neural network core used as a learning method includes various deep learning methods such as a restricted Boltzmann machine (RBM), a deep belief network (DBN), and a deep Q-network, in addition to the DNN, the CNN, and the RNN, and may be applied to fields such as computer vision, speech recognition, natural language processing, and voice/signal processing.

Recently, attempts to integrate AI with a wireless communication system have appeared, but this has been concentrated in the field of wireless resource management and allocation in the application layer, network layer, in particular, deep learning. However, such research is gradually developing into the MAC layer and the physical layer, and in particular, attempts to combine deep learning with wireless transmission in the physical layer have appeared. The AI-based physical layer transmission refers to applying a signal processing and communication mechanism based on an AI driver, rather than a traditional communication framework in the fundamental signal processing and communication mechanism. For example, deep learning-based channel coding and decoding, deep learning-based signal estimation and detection, deep learning-based MIMO mechanism, AI-based resource scheduling and allocation, and the like, nay be included.

### Terahertz (THz) communication

THz communication is applicable to the 6G system. For example, a data rate may increase by increasing bandwidth. This may be performed by using sub-TH communication with wide bandwidth and applying advanced massive MIMO technology.

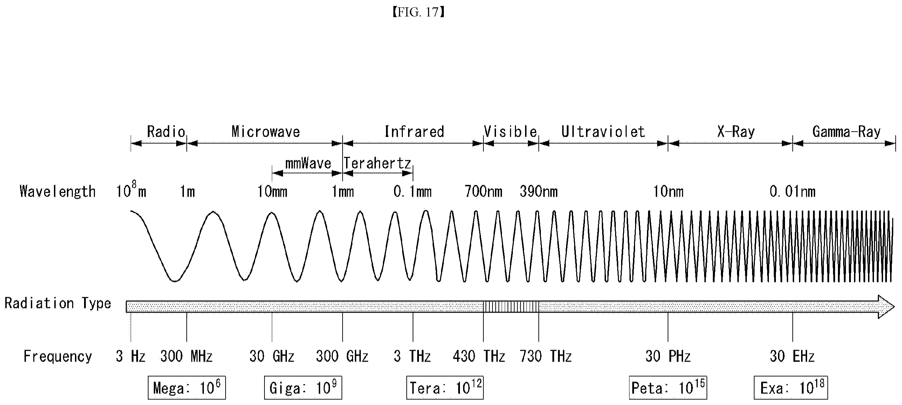

FIG. 17 illustrates an electromagnetic spectrum applicable to the present disclosure. For example, referring to FIG. 17, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### Optical wireless technology

Optical wireless communication (OWC) technology is planned for 6G communication in addition to RF based communication for all possible device-to-access networks. This network is connected to a network-to-backhaul/fronthaul network connection. OWC technology has already been used since 4G communication systems but will be more widely used to satisfy the requirements of the 6G communication system. OWC technologies such as light fidelity/visible light communication, optical camera communication and free space optical (FSO) communication based on wide band are well-known technologies. Communication based on optical wireless technology may provide a very high data rate, low latency and safe communication. Light detection and ranging (LiDAR) may also be used for ultra high resolution 3D mapping in 6G communication based on wide band.

### FSO backhaul network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

**Massive MIMO technology**

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

**Blockchain**

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

**3D networking**

The 6G system integrates terrestrial and public networks to support vertical expansion of user communication. A 3D BS will be provided through low-orbit satellites and UAVs. Adding new dimensions in terms of altitude and related degrees of freedom makes 3D connections significantly different from existing 2D networks.

**Quantum communication**

In the context of the 6G network, unsupervised reinforcement learning of the network is promising. The supervised learning method cannot label the vast amount of data generated in 6G. Labeling is not required for unsupervised learning. Thus, this technique can be used to autonomously build a representation of a complex network. Combining reinforcement learning with unsupervised learning may enable the network to operate in a truly autonomous way.

**Unmanned aerial vehicle**

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

**Cell-free Communication**

The tight integration of multiple frequencies and heterogeneous communication technologies is very important in the 6G system. As a result, a user can seamlessly move from network to network without having to make any manual configuration in the device. The best network is automatically selected from the available communication technologies. This will break the limitations of the cell concept in wireless communication. Currently, user movement from one cell to another cell causes too many handovers in a high-density network, and causes handover failure, handover delay, data loss and ping-pong effects. 6G cell-free communication will overcome all of them and provide better QoS. Cell-free communication will be achieved through multi-connectivity and multi-tier hybrid technologies and different heterogeneous radios in the device.

**Wireless information and energy transfer (WIET)**

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

**Integration of sensing and communication**

An autonomous wireless network is a function for continuously detecting a dynamically changing environment state and exchanging information between different nodes. In 6G, sensing will be tightly integrated with communication to support autonomous systems.

**Integration of access backhaul network**

In 6G, the density of access networks will be enormous. Each access network is connected by optical fiber and backhaul connection such as FSO network. To cope with a very large number of access networks, there will be a tight integration between the access and backhaul networks.

**Hologram beamforming**

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram beamforming (HBF) is a new beamforming method that differs significantly from MIMO systems because this uses a software-defined antenna. HBF will be a very effective approach for efficient and flexible transmission and reception of signals in multi-antenna communication devices in 6G.

**Big data analysis**

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

**Large intelligent surface (LIS)**

In the case of the THz band signal, since the straightness is strong, there may be many shaded areas due to obstacles. By installing the LIS near these shaded areas, LIS technology that expands a communication area, enhances communication stability, and enables additional optional services becomes important. The LIS is an artificial surface made of electromagnetic materials, and can change propagation of incoming and outgoing radio waves. The LIS can be viewed as an extension of massive MIMO, but differs from the massive MIMO in array structures and operating mechanisms. In addition, the LIS has an advantage such as low power consumption, because this operates as a reconfigurable reflector with passive elements, that is, signals are only passively reflected without using active RF chains. In addition, since each of the passive reflectors of the LIS must independently adjust the phase shift of an incident signal, this may be advantageous for wireless communication channels. By properly adjusting the phase shift through an LIS controller, the reflected signal can be collected at a target receiver to boost the received signal power.

**THz wireless communication**

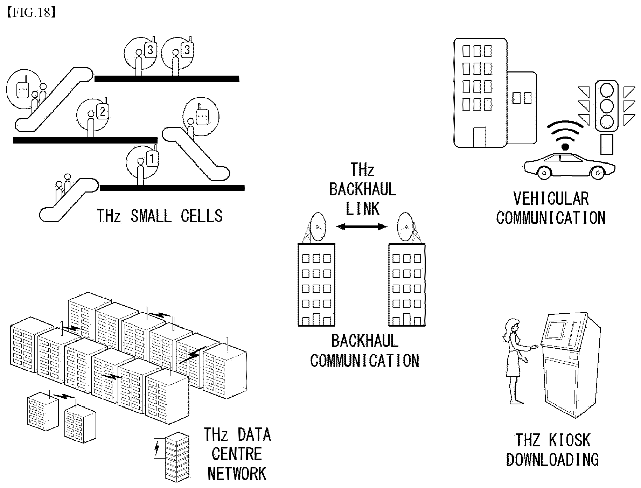

FIG. 18 illustrates a THz communication method applicable to the present disclosure.
Referring to FIG. 18, THz wireless communication uses a THz wave having a frequency of approximately 0.1 to 10 THz (1 THz = 1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.

In addition, the photon energy of the THz wave is only a few meV and thus is harmless to the human body. A frequency band which will be used for THz wireless communication may be a D-band (110 GHz to 170 GHz) or a H-band (220 GHz to 325 GHz) band with low propagation loss due to molecular absorption in air. Standardization discussion on THz wireless communication is being discussed mainly in IEEE 802.15 THz working group (WG), in addition to 3GPP, and standard documents issued by a task group (TG) of IEEE 802.15 (e.g., TG3d, TG3e) specify and supplement the description of this disclosure. The THz wireless communication may be applied to wireless cognition, sensing, imaging, wireless communication, and THz navigation.

Specifically, referring to FIG. 18, a THz wireless communication scenario may be classified into a macro network, a micro network, and a nanoscale network. In the macro network, THz wireless communication may be applied to vehicle-to-vehicle (V2V) connection and backhaul/fronthaul connection. In the micro network, THz wireless communication may be applied to near-field communication such as indoor small cells, fixed point-to-point or multi-point connection such as wireless connection in a data center or kiosk downloading. Table 5 below shows an example of technology which may be used in the THz wave.

【Table 5】

| Transceivers Device | Available (immature): UTC-PD, RTD, 200 SBD |
| --- | --- |
| Modulation and coding | Low order modulation, polarizing color QAM, LDPC, Reed |
| Antenna | Omni and directional, phasing array with less number of antenna |
| Bandwidth | 69GHz (or ~23GHz) at 300GHz |
| Channel number | 59 |
| Data rate per channel | 77GHz |
| Bit error rate | 1E-6 |
| Radio transmittance | 300G/1s indoor |
| Device size | |

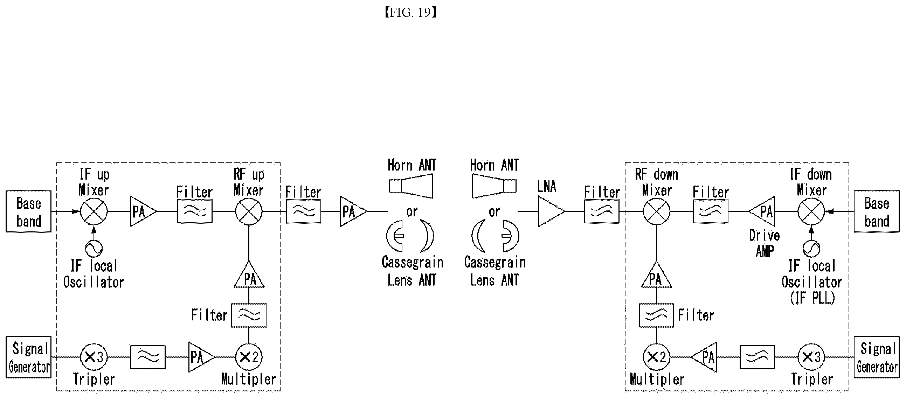

FIG. 19 illustrates a THz wireless communication transceiver applicable to the present disclosure.

Referring to FIG. 19, THz wireless communication may be classified based on the method of generating and receiving THz. The THz generation method may be classified as an optical device or electronic device based technology.

At this time, the method of generating THz using an electronic device includes a method using a semiconductor device such as a resonance tunneling diode (RTD), a method using a local oscillator and a multiplier, a monolithic microwave integrated circuit (MMIC) method using a compound semiconductor high electron mobility transistor (HEMT) based integrated circuit, and a method using a Si-CMOS-based integrated circuit. In the case of FIG. 19, a multiplier (doubler, tripler, multiplier) is applied to increase the frequency, and radiation is performed by an antenna through a subharmonic mixer. Since the THz band forms a high frequency, a multiplier is essential. Here, the multiplier is a circuit having an output frequency which is N times an input frequency, and matches a desired harmonic frequency, and filters out all other frequencies. In addition, beamforming may be implemented by applying an array antenna or the like to the antenna of FIG. 19. In FIG. 19, IF represents an intermediate frequency, a tripler and a multiplier represents a multiplier, PA represents a power amplifier, and LNA represents a low noise amplifier, and PLL represents a phase-locked loop.

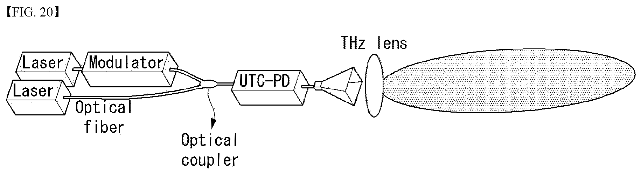

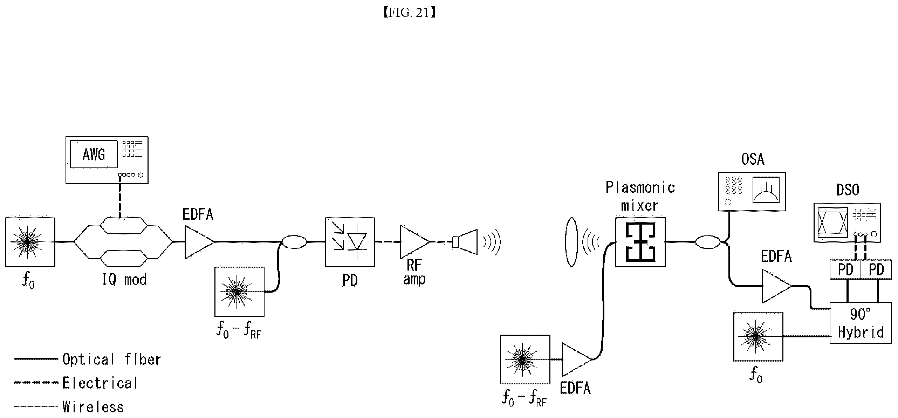

FIG. 20 illustrates a THz signal generation method applicable to the present disclosure. FIG. 21 illustrates a wireless communication transceiver applicable to the present disclosure.

Referring to FIGS. 20 and 21, the optical device-based THz wireless communication technology means a method of generating and modulating a THz signal using an optical device. The optical device-based THz signal generation technology refers to a technology that generates an ultrahigh-speed optical signal using a laser and an optical modulator, and converts it into a THz signal using an ultrahigh-speed photodetector. This technology is easy to increase the frequency compared to the technology using only the electronic device, can generate a high-power signal, and can obtain a flat response characteristic in a wide frequency band. In order to generate the THz signal based on the optical device, as shown in FIG. 20, a laser diode, a broadband optical modulator, and an ultrahigh-speed photodetector are required. In the case of FIG. 20, the light signals of two lasers having different wavelengths are combined to generate a THz signal corresponding to a wavelength difference between the lasers. In FIG. 20, an optical coupler refers to a semiconductor device that transmits an electrical signal using light waves to provide coupling with electrical isolation between circuits or systems, and a uni-travelling carrier photo-detector (UTC-PD) is one of photodetectors, which uses electrons as an active carrier and reduces the travel time of electrons by bandgap grading. The UTC-PD is capable of photodetection at 150 GHz or more. In FIG. 21, an erbium-doped fiber amplifier (EDFA) represents an optical fiber amplifier to which erbium is added, a photo detector (PD) represents a semiconductor device capable of converting an optical signal into an electrical signal, and OSA represents an optical sub assembly in which various optical communication functions (e.g., photoelectric conversion, electrophonic conversion, etc.) are modularized as one component, and DSO represents a digital storage oscilloscope.

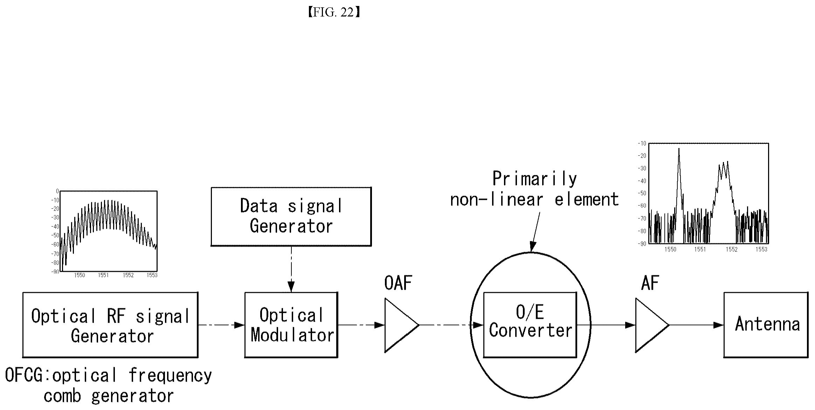

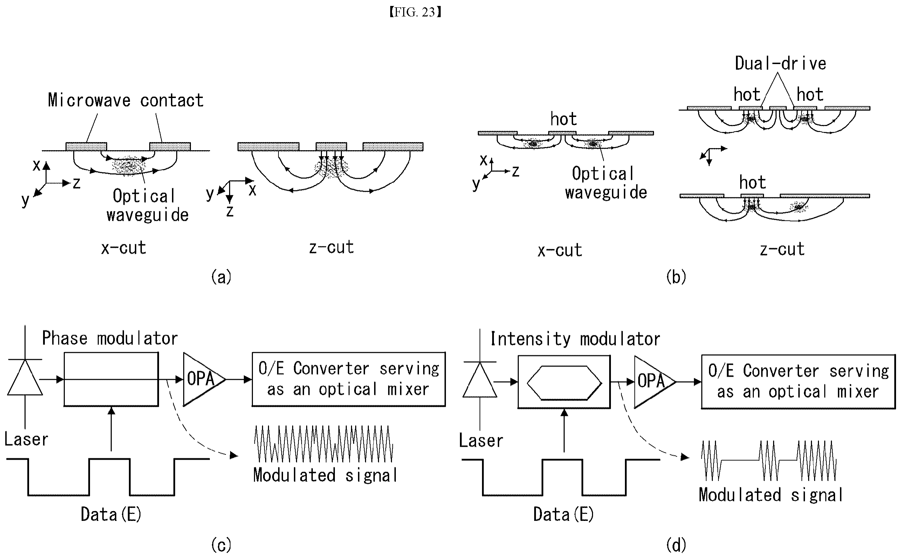

FIG. 22 illustrates a transmitter structure applicable to the present disclosure. FIG. 23 illustrates a modulator structure applicable to the present disclosure.

Referring to FIGS. 22 and 23, generally, the optical source of the laser may change the phase of a signal by passing through the optical wave guide. At this time, data is carried by changing electrical characteristics through microwave contact or the like. Thus, the optical modulator output is formed in the form of a modulated waveform. A photoelectric modulator (O/E converter) may generate THz pulses according to optical rectification operation by a nonlinear crystal, photoelectric conversion (O/E conversion) by a photoconductive antenna, and emission from a bunch of relativistic electrons. The terahertz pulse (THz pulse) generated in the above manner may have a length of a unit from femto second to pico second. The photoelectric converter (O/E converter) performs down conversion using non-linearity of the device.

Given THz spectrum usage, multiple contiguous GHz bands are likely to be used as fixed or mobile service usage for the terahertz system. According to the outdoor scenario criteria, available bandwidth may be classified based on oxygen attenuation $10^2$ dB/km in the spectrum of up to 1 THz. Accordingly, a framework in which the available bandwidth is composed of several band chunks may be considered. As an example of the framework, if the length of the terahertz pulse (THz pulse) for one carrier (carrier) is set to 50 ps, the bandwidth (BW) is about 20 GHz.

Effective down conversion from the infrared band to the terahertz band depends on how to utilize the nonlinearity of the O/E converter. That is, for down-conversion into a desired terahertz band (THz band), design of the photoelectric converter (O/E converter) having the most ideal non-linearity to move to the corresponding terahertz band (THz band) is required. If a photoelectric converter (O/E converter) which is not suitable for a target frequency band is used, there is a high possibility that an error occurs with respect to the amplitude and phase of the corresponding pulse.

In a single carrier system, a terahertz transmission/reception system may be implemented using one photoelectric converter. In a multi-carrier system, as many photoelectric converters as the number of carriers may be required, which may vary depending on the channel environment. Particularly, in the case of a multi-carrier system using multiple broadbands according to the plan related to the above-described spectrum usage, the phenomenon will be prominent. In this regard, a frame structure for the multi-carrier system can be considered. The down-frequency-converted signal based on the photoelectric converter may be transmitted in a specific resource region (e.g., a specific frame). The frequency domain of the specific resource region may include a plurality of chunks. Each chunk may be composed of at least one component carrier (CC).

Here, wireless communication technology implemented in the wireless devices 200a and 200b of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices of the present disclosure may perform communication based on LTE-M technology. In this case, as an example, the LTE-M technology may be an example of the LPWAN and may be called various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M. Additionally or alternatively, the wireless communication technology implemented in the wireless devices 200a and 200b of the present disclosure may include at least one of ZigBee, Bluetooth, and Low Power Wide Area Network (LPWAN) considering the low-power communication, and is not limited to the name described above. As an example, the ZigBee technology may generate personal area networks (PAN) associated with small/low-power digital communication based on various standards including IEEE 802.15.4, and the like, and may be called various names.

## Specific Embodiment of Present Disclosure

The contents described above may be applied in combination with embodiments proposed in the present disclosure to be described below or may be supplemented to clarify technical features of the embodiments proposed in the present disclosure. Embodiments to be described below are just distinguished for convenience of description and it is needless to say that some components of any one embodiment may be substituted with some components of another embodiment or may be applied in combination with each other. The present disclosure relates to a wireless transmission device, a method, and a procedure for transmitting a large amount of data with low latency in the wireless communication system.

## Background Art

As the amount of data transmitted through the wireless communication system rapidly increases, a wireless communication technology through a high frequency band capable of high-speed data transmission with a wide bandwidth is attracting attention. In general, as a frequency band increases, a propagation loss occurring in free space increases. This means that a path loss according to a distance increases in mmWave and TeraHertz (THz) bands. In particular, in the THz band, a loss due to an obstacle is large due to a large straightness of propagation, and an absorption loss due to water molecules in air or the like occurs according to a frequency, so that a path loss may further increase. When transmission power is the same, the cell space may decrease as the path loss increases.

In order to solve this problem, a beamforming technology using a plurality of antennas may be used. In particular, a massive multi input multi output (MIMO) technology combining a large number of antennas and beamforming is attracting attention as an important technology capable of solving a path loss problem in a high frequency band such as THz. Since a wavelength is shortened as the frequency increases, it is easy to integrate a large-scale antenna in a small area, and it is intended to overcome a large path loss by increasing an antenna gain by using a large number of the antennas.

When many antennas are used, the antenna gain may be increased, but the beam width may be narrowed. In this case, it may be difficult to cover a large cell area with one beam. In order to solve this problem, beam sweeping may be used in which an entire cell is divided into several regions corresponding to the beam width, and beams are sequentially provided to the several regions.

When the base station uses beamforming in the 5G NR system, the base station may transmit a Synchronization Signal (SS) and a Physical Broadcast CHannel (PBCH) by using the beam sweeping. The synchronization signal includes a Primary Synchronization Signal (PSS) and a Secondary Synchronization Signal (SSS). The synchronization signal and the PBCH transmitted by using the same beam are referred to as a synchronization signal block (SSB).

The symbols/abbreviations/terms used in the present disclosure are as follows.

- DM-RS: De-Modulation Reference Signal
- NR: New Radio
- PBCH: Physical Broadcast Channel
- PSS: Primary Synchronization Signal
- SBG: Synchronization Beam Group
- SS: Synchronization Signal
- SSB: Synchronization Signal Block
- SSS: Secondary Synchronization Signal

In the present disclosure, a matrix may be represented by a bold upper-case alphabet (e.g., X), and a vector may be represented by a bold lower-case alphabet (e.g., x).

In the present disclosure, the base station may divide an entire cell for which a service is to be provided into a plurality of regions, and sequentially transmit a Synchronization signal Beam Group (SBG) to each region. Each synchronization signal beam group may include a plurality of synchronization signal beams. The plurality of synchronization signal beams in one synchronization signal beam group may be simultaneously transmitted by sharing a frequency resource. The plurality of synchronization signal beams within one synchronization signal beam group may include at least one or more synchronization signals divided by an orthogonal code. The synchronization signals divided by the orthogonal code may be a signal obtained by spreading the orthogonal code to a synchronization signal sequence. Meanwhile, although the present disclosure is mainly described with respect to beams divided by the orthogonal code, a content of the present disclosure is not limited only to the beams divided by the orthogonal code, and may also be applied to beams divided by a quasi-orthogonal code.

Specific Embodiment of Present Disclosure

The contents described above may be applied in combination with embodiments proposed in the present disclosure to be described below or may be supplemented to clarify technical features of the embodiments proposed in the present disclosure. Embodiments to be described below are just distinguished for convenience of description and it is needless to say that some components of any one embodiment may be substituted with some components of another embodiment or may be applied in combination with each other. The present disclosure relates to a wireless transmission device, a method, and a procedure for transmitting a large amount of data with low latency in the wireless communication system.

**Background Art**

As the amount of data transmitted through the wireless communication system rapidly increases, a wireless communication technology through a high frequency band capable of high-speed data transmission with a wide bandwidth is attracting attention. In general, as a frequency band increases, a propagation loss occurring in free space increases. This means that a path loss according to a distance increases in mmWave and TeraHertz (THz) bands. In particular, in the THz band, a loss due to an obstacle is large due to a large straightness of propagation, and an absorption loss due to water molecules in air or the like occurs according to a frequency, so that a path loss may further increase. When transmission power is the same, the cell space may decrease as the path loss increases.

In order to solve this problem, a beamforming technology using a plurality of antennas may be used. In particular, a massive multi-input multi-output (MIMO) technology combining a large number of antennas and beamforming is attracting attention as an important technology capable of solving a path loss problem in a high frequency band such as THz. Since a wavelength is shortened as the frequency increases, it is easy to integrate a large-scale antenna in a small area, and it is intended to overcome a large path loss by increasing an antenna gain by using a large number of the antennas.

When many antennas are used, the antenna gain may be increased, but the beam width may be narrowed. In this case, it may be difficult to cover a large cell area with one beam. In order to solve this problem, beam sweeping may be used in which an entire cell is divided into several regions corresponding to the beam width, and beams are sequentially provided to the several regions.

When the base station uses beamforming in the 5G NR system, the base station may transmit a synchronization signal (SS) and a physical broadcast channel (PBCH) by using the beam sweeping. The synchronization signal includes a primary synchronization signal (PSS) and a secondary synchronization signal (SSS). The synchronization signal and the PBCH transmitted by using the same beam are referred to as a synchronization signal block (SSB).

The symbols/abbreviations/terms used in the present disclosure are as follows.

- DM-RS: De-Modulation Reference Signal
- NR: New Radio
- PBCH: Physical Broadcast Channel
- PSS: Primary Synchronization Signal
- SBG: Synchronization Beam Group
- SS: Synchronization Signal
- SSB: Synchronization Signal Block
- SSS: Secondary Synchronization Signal

In the present disclosure, a matrix may be represented by a bold upper-case alphabet (e.g., X), and a vector may be represented by a bold lower-case alphabet (e.g., x).

In the present disclosure, the base station may divide an entire cell for which a service is to be provided into a plurality of regions, and sequentially transmit a synchronization signal beam group (SBG) to each region. Each synchronization signal beam group may include a plurality of synchronization signal beams. The plurality of synchronization signal beams in one synchronization signal beam group may be simultaneously transmitted by sharing a frequency resource. The plurality of synchronization signal beams within one synchronization signal beam group may include at least one or more synchronization signals divided by an orthogonal code. The synchronization signals divided by the orthogonal code may be a signal obtained by spreading the orthogonal code to a synchronization signal sequence. Meanwhile, although the present disclosure is mainly described with respect to beams divided by the orthogonal code, a content of the present disclosure is not limited only to the beams divided by the orthogonal code, and may also be applied to beams divided by a quasi-orthogonal code.

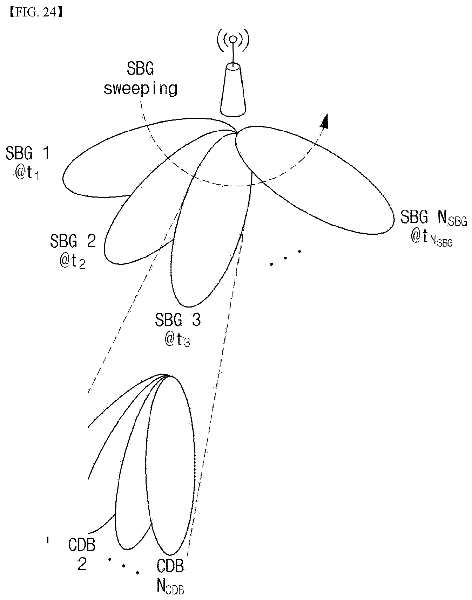

FIG. 24 is a conceptual view showing an example of beam sweeping according to an embodiment of the present disclosure.

FIG. 24 is a conceptual view illustrating an example of a case where a transmitter sweeps an entire cell with $N_{SBG}$ SBGs.

The transmitter may transmit SBGs (SBG 1 to SBG NSBG) at different times ($t_1$ to $t_{N_{SBG}}$). Each of the SBs may include $N_{CDB}$ Code Division Beams (CDBs). $N_{CDB}$ CDBs may be simultaneously transmitted in one synchronization signal (SS) beam group. $N_{CDB}$ CDBs that are simultaneously transmitted may be classified by an orthogonal code such as a Walsh code.

Each of the SBGs may include the PSS, the SSS, and the PBCH, and some thereof may be transmitted as the CDB. The transmitter may transmit a synchronization signal beam group index (SBG index), such as a synchronization signal block index (SSB index) of NR, to the UE. The transmitter may transmit the SBG index to a receiver through a DM-RS and data (payload) of the PBCH.

The receiver may transmit, to the transmitter, the SBG index and the CDB index decoded from the DM-RS and the data (payload) of the PBCH. The receiver may transmit, to the transmitter, the SBG index and the CDB index through a Random Access Channel (RACH), etc.

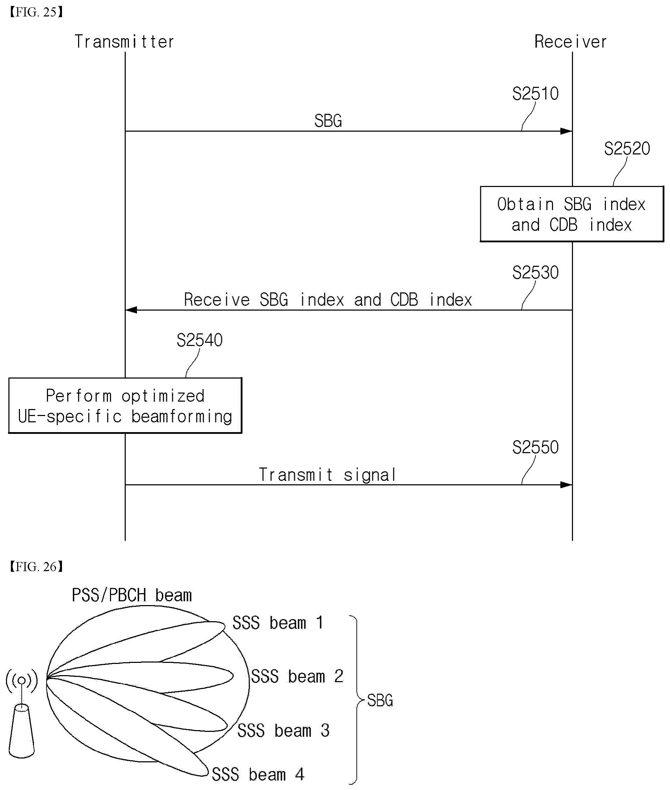

FIG. 25 is a flowchart of a data transmission/reception method according to an embodiment of the present disclosure.

Referring to FIG. 25, a transmitter may transmit an SBG to a receiver (S2510). The SBG may include a PSS, a plurality of SSSs, and a PBCH. The transmitter may transmit the PSS and the PBCH to the receiver through an SS beam, and transmit a plurality of SSSs to the receiver through a CDB.

The receiver may receive the SBG from the transmitter (S2520). The receiver may receive the PSS and the PBCH from the transmitter through the SS beam, and receive the plurality of SSSs from the transmitter through a plurality of CDBs.

The receiver may obtain an SBG index and a CDB index based on the SBG (S2520). The receiver may obtain the SBG index by decoding the SBG, and obtain the CDB index by detecting the SBG. The receiver may transmit the SBG index and the CDB index to the transmitter (S2530).

The transmitter may receive the SBG index and the CDB index from the receiver (S2530). The transmitter may perform optimal beamforming based on the SBG index and the CDB index (S2540). A optimal beam may be an optimized UE-specific beam. The transmitter may transmit a signal to the receiver through the optimal beam (S2550). The receiver may receive a signal from the transmitter through the optimal beam (S2550).

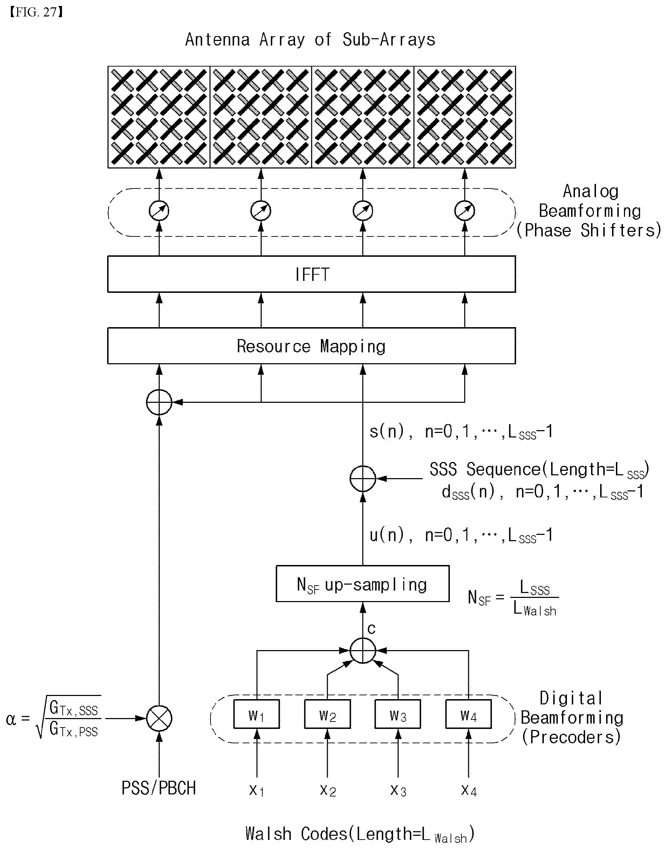

FIG. 26 is a conceptual view for describing beamforming according to an embodiment of the present disclosure. FIG. 27 is a conceptual view for describing a beamforming method according to an embodiment of the present disclosure.

Referring to FIG. 26, the transmitter may transmit a PSS and a PBCH to the receiver through one synchronization signal beam (PSS/PBCH beam), and transmit a plurality of SSSs to the receiver through four CDBs (SSS beam 1 to SSS beam 4).

FIG. 27 is a conceptual view for describing a beamforming method when the transmitter transmits the PSS and the PBCH to the receiver through one wide beam (PSS/PBCH beam), and transmits the plurality of SSSs to the receiver through four narrow CDBs (SSS beam 1 to SSS beam 4).

In FIG. 27, the transmitter may transmit the SBG to the receiver through a linear array antenna system composed of four subarray antennas. Each of the subarray antennas may be composed of a plurality of dual polarized antennas.

In FIG. 27, the transmitter may transmit a PSS/PBCH beam to the receiver by using one subarray antenna, and transmit code division SSS beams by using four subarray antennas. Hereinafter, an example of a process in which the transmitter performs beamforming will be described.

Referring to FIG. 27, the transmitter may perform power boosting on the PSS and the PBCH. A gain value of the power boosting may be represented as in Equation 1 below.

[Equation 1]

$$\alpha = \sqrt{\frac{G_{Tx,SSS}}{G_{Tx,PSS}}}$$

In Equation 1, $\alpha$ may be a gain value of power boosting, $G_{Tx,PSS}$ may be a transmit antenna gain of the PSS/PBCH beam, and $G_{Tx,PSS}$ may be antenna gains of SSS CDBs. $G_{Tx,PSS}$ may be smaller than $G_{Tx,SSS}$.

The transmitter may perform the power boosting on the PSS and PBCH so that the PSS/PBCH beam and the SSS CDBs have similar cell coverage.

The transmitter may perform pre-coding on four different orthogonal codes. The transmitter may perform the precoding by multiplying four different orthogonal codes by the linear coding vector. Here, four different orthogonal codes may be row components of a Walsh code matrix. The Walsh code matrix and the linear coding vector may be expressed as in Equations 2 and 3 below.

[Equation 2]

$$X = \begin{bmatrix} x_1 \\ x_2 \\ x_3 \\ x_4 \end{bmatrix} = \begin{bmatrix} x_{1,1} & x_{1,2} & x_{1,3} & x_{1,4} \\ x_{2,1} & x_{2,2} & x_{2,3} & x_{2,4} \\ x_{3,1} & x_{3,2} & x_{3,3} & x_{3,4} \\ x_{4,1} & x_{4,2} & x_{4,3} & x_{4,4} \end{bmatrix} = \begin{bmatrix} +1 & +1 & +1 & +1 \\ +1 & -1 & +1 & -1 \\ +1 & +1 & -1 & -1 \\ +1 & -1 & -1 & +1 \end{bmatrix}$$

[Equation 3]

$$w_i = \begin{bmatrix} w_{i,1}, \ldots, w_{i,8} \end{bmatrix}^T$$

The transmitter may perform an aggregation for four orthogonal codes for which precoding is performed. A result of aggregating four orthogonal codes on which precoding is performed may be expressed as in Equation 4 below.

[Equation 4]

$$c = \sum_{i=1}^{4} w_i\, x_i = \left[\sum_{i=1}^{4} w_i\, x_{i,1}, \ldots, \sum_{i=1}^{4} w_i\, x_{i,4}\right] = \begin{bmatrix} \sum_{i=1}^{4} w_{i,1}\, x_{i,1} & \cdots & \sum_{i=1}^{4} w_{i,1}\, x_{i,4} \\ \vdots & \ddots & \vdots \\ \sum_{i=1}^{4} w_{i,8}\, x_{i,1} & \cdots & \sum_{i=1}^{4} w_{i,8}\, x_{i,4} \end{bmatrix}$$

In Equation 4, c may be an aggregation result of four orthogonal codes on which precoding is performed. The transmitter may perform up-sampling for the aggregation result. The transmitter may perform the up-sampling by repeating each sample of the aggregation result as large as an up-sampling ratio. The up-sampling ratio may be expressed as in Equation 5 below, and an aggregation result on which the up-sampling is performed may be expressed as in Equation 6 below.

[Equation 5]

$$N_{SF} = \frac{L_{SSS}}{L_{Walsh}}$$

[Equation 6]

$$\boldsymbol{u}(n) = \sum_{i=1}^{4} w_i\, x_{i,j}, \text{where } j = \left\lfloor \frac{n}{N_{SF}} \right\rfloor$$

In Equations 5 and 6, $N_{SF}$ may be the up-sampling ratio, $L_{SSS}$ may be a length of the SSS sequence, $L_{Walsh}$ may be a length of the Walsh code, and n may be $0 \leq n < L_{SSS}$. For example, when the length of the SSS sequence is 128 and the length of the Walsh code is 32, $N_{SF}$ may be 32.

The transmitter may obtain a plurality of orthogonal SSS sequences based on the aggregation result on which the up-sampling is performed, and the SSS sequence. Here, the orthogonal SSS sequence may be represented as in Equation 7 below.

[Equation 7]

$$\boldsymbol{s}(n) = \boldsymbol{u}(n)\, d_{SSS}(n)$$

In Equation 7, s(n) may be the plurality of orthogonal SSS sequences, n may be $0 \leq n < L_{SSS}$, and $d_{SSS}(n)$ may be the SSS sequence. The SSS sequence may be obtained based on Equations 8 to 18 below.

[Equation 8]

$$d_{SSS}(n) = \{1 - 2x_0\big((n + m_0)\ mod\ 127\big)\}\{1 - 2x_1\big((n + m_1)\ mod\ 127\big)\}$$

[Equation 9]

$$m_0 = 15 \left\lfloor \frac{N_{ID}^{(1)}}{112} \right\rfloor + 5 N_{ID}^{(2)}$$

[Equation 10]

$$m_1 = N_{ID}^{(1)}\ mod\ 112$$

[Equation 11]

$$x_0(i + 7) = \big(x_0(i + 4) + x_0(i)\big) \bmod 2$$

[Equation 12]

$$x_1(i + 7) = \big(x_1(i + 1) + x_1(i)\big) \bmod 2$$

[Equation 13]

$$[x_0(6)\ x_0(5)\ x_0(4)\ x_0(3)\ x_0(2)\ x_0(1)\ x_0(0)] = [0\ 0\ 0\ 0\ 0\ 0\ 1]$$

[Equation 14]

$$[x_1(6)\ x_1(5)\ x_1(4)\ x_1(3)\ x_1(2)\ x_1(1)\ x_1(0)] = [0\ 0\ 0\ 0\ 0\ 0\ 1]$$

[Equation 15]

$$N_{ID}^{cell} = 3N_{ID}^{(1)} + N_{ID}^{(2)}$$

[Equation 16]

$$N_{ID}^{cell} \in \{0,1,\dots,1007\}$$

[Equation 17]

$$N_{ID}^{(1)} \in \{0,1,\dots,335\}$$

[Equation 18]

$$N_{ID}^{(2)} \in \{0,1,2\}$$

In Equations 8 to 18, n may be $0 \leq n < L_{SSS}$, and $N_{ID}^{cell}$ may be a cell identifier. The transmitter may perform resource mapping for the PSS, the PBCH, and the orthogonal SSS sequence. The transmitter may map a signal in which the PSS, the PBCH, the code division SSS beams are superimposed to the time resource and the frequency resource.

The transmitter may perform Inverse Fast Fourier Transform (IFFT) for the mapped signal. The transmitter may perform analog beamforming for the signal for which the IFFT is performed. The transmitter may be performed the analog beamforming through a phase shifter. The transmitter may generate an SBG including the PSS/PBCH beam and four code division SSS beams by performing the analog beamforming.

The transmitter may transmit the PSS and the PBCH to the receiver through the PSS/PBCH beam. The transmitter may transmit the orthogonal SSS sequences of the receiver through four code division SSS beams. The transmitter may transmit the PSS and the PBCH to the receiver by using one subarray antenna, and transmit the orthogonal SSS sequences by using all of four subarray antennas. The transmitter may generate the PSS/PBCH beam by using one subarray antenna and generate the code division SSS beams by using all of four subarray antennas.

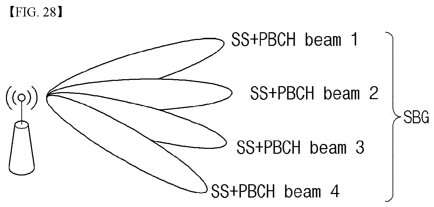

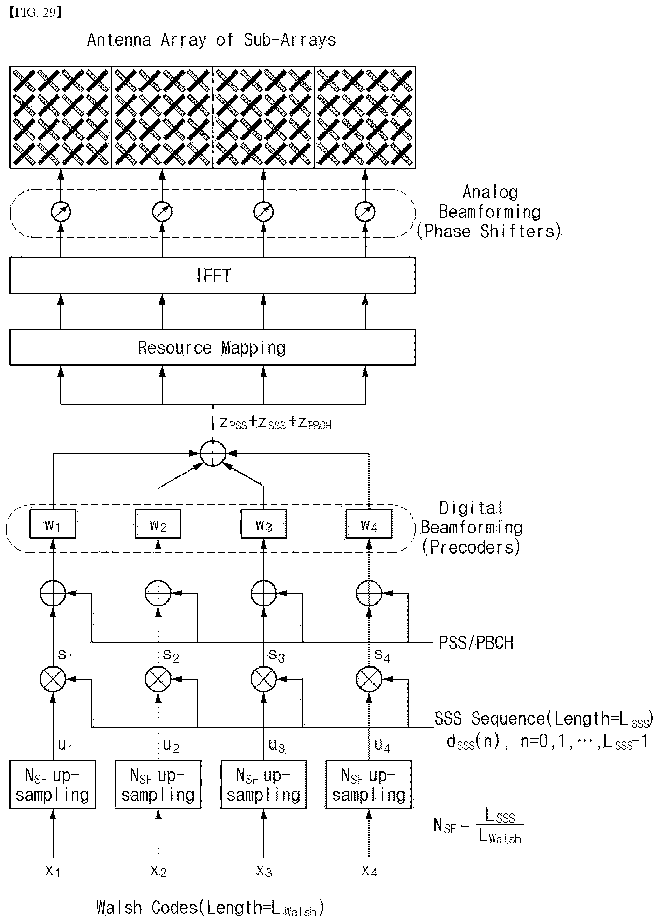

FIG. 28 is a conceptual view for describing beamforming according to an embodiment of the present disclosure. FIG. 29 is a conceptual view for describing a beamforming method according to an embodiment of the present disclosure.

Referring to FIG. 28, the transmitter may transmit the PSS, the PBCH, and the SSSs to the receiver through the same beams (SS + PBCH beam 1 to SS + PBCH beam 4). In this case, the SSS beams are transmitted with different orthogonal codes, and thus may be distinguished not only in a spatial domain but also in a code domain, but the PSS and the PBCH beams transmit the same signal, and thus are distinguished only in the spatial domain. Since antenna gains according to beamforming are the same, similar cell coverage may be ensured without power boosting for the PSS and PBCH.

In FIG. 29, the transmitter may transmit the SBG to the receiver using four subarray antennas. Each of the subarray antennas may be composed of a plurality of dual polarized antennas. Sweeping of the SBG may be performed through the analog beamforming using the phase shifter or the like.

The transmitter may perform up-sampling for four orthogonal division codes. The four orthogonal division codes for which the up-sampling is performed may be expressed as in Equation 19 below.

[Equation 19]

$$u_i(n) = x_{i,j}, \text{where } j = \left\lfloor \frac{n}{N_{SF}} \right\rfloor$$

In Equation 19, $u_i(n)$ may be one of four orthogonal division codes for which the up-sampling is performed. n may be $0 \leq n < L_{SSS}$.

The transmitter may obtain an orthogonal division SSS sequence based on the orthogonal division code for which the up-sampling is performed, and the SSS sequence. The orthogonal division SSS sequence may be represented as in Equation 20 below.

[Equation 20]

$$s_i(n) = u_i(n)\, d_{SSS}(n)$$

In Equation 20, $s_i(n)$ may be one of the orthogonal division SSS sequences, and n may be $0 \leq n < L_{SSS}$.

The transmitter may perform precoding for the PSS, the PBCH, and the orthogonal SSS sequence. The transmitter may perform the precoding by multiplying the PSS, the PBCH, and the orthogonal SSS sequence by the linear coding vector. The transmitter may obtain an aggregation signal for the PSS, the PBCH, and the orthogonal SSS sequence for which the precoding is performed. Here, the aggregation signal for the orthogonal division SSS sequence for which the precoding is performed may be represented as in Equation 21 below.

[Equation 21]

$$z_{SSS}(n) = \sum_{i=1}^{4} w_i\, s_i(n)$$

In Equation 21, $z_{SSS}(n)$ may be an aggregation signal for the orthogonal division SSS sequence for which the precoding is performed.

The transmitter may map the aggregation signal for the PSS, the PBCH, and the orthogonal division SSS sequence to the time and frequency resources, and perform the IFFT.

The transmitter may perform the analog beamforming for the signal for which the IFFT is performed. The transmitter may performed the analog beamforming through the phase shifter. The transmitter may generate an SBG including four code division SSS beams by performing the analog beamforming. The transmitter may transmit the PSS, the PBCH, and the orthogonal division SSS sequence to the receiver through four code division SSS beams.

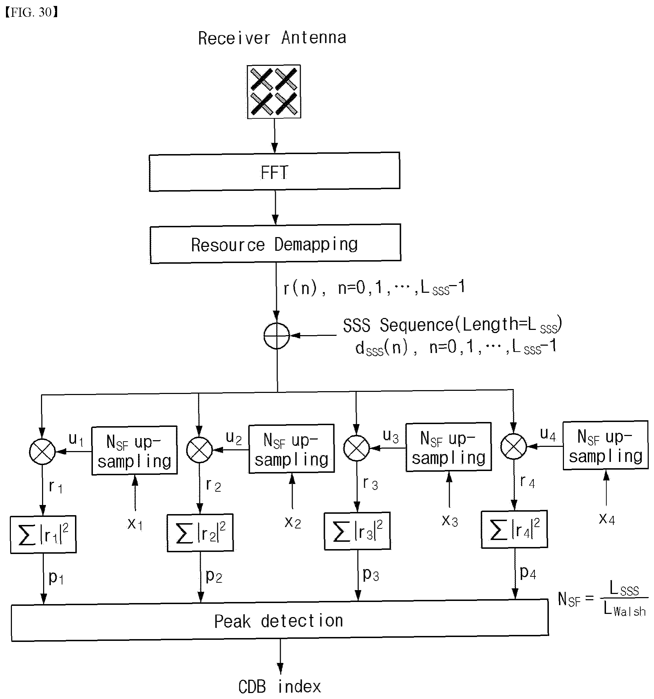

FIG. 30 is a conceptual view for describing a method for receiving a signal according to an embodiment of the present disclosure.

FIG. 30 is a conceptual view showing an example of a receiver that detects an optimal CDB index when the number of SSS CDBs is 4 ($N_{CDB} = 4$). The receiver may receive a signal from the transmitter through an antenna. In the case of an OFDM system, the receiver may perform Fast Fourier Transform (FFT) for the signal. The receiver may perform resource demapping for the signal for which the FFT is performed. The receiver may perform dispreading for the signal for which the demapping is performed based on the SSS sequence. The receiver may multiply the signal for which the dispreading is performed based on the SSS sequence by a Walsh code for which the up-sampling is performed. The signal multiplied by the Walsh code may be represented as in Equation 22 below.

[Equation 22]

$$r_i(n) = r(n)d_{SSS}(n)u_i(n) = r(n)d_{SSS}(n)x_{i,j}, \text{where } j = \left\lfloor \frac{n}{N_{SF}} \right\rfloor$$

In Equation 22, $r_i(n)$ may be a signal multiplied by one of the up-sampled Walsh codes, $r(n)$ may be a signal on which the demapping is performed, $d_{SSS}(n)$ may be the SSS sequence, $u_i(n)$ may be one of the Walsh codes for which the up-sampling is performed, i may be 1 to $N_{CDB}$, and n may be $0 \leq n < L_{SSS}$.

The receiver may obtain SSS receive powers of the CDBs based on the signal multiplied by the up-sampled Walsh code. The receiver may obtain the SSS receive power for the CDBs, based on Equation 23 below.

[Equation 23]

$$p_i = \sum_{n=0}^{L_{SSS}-1} |r_i(n)|^2$$

In Equation 23, $p_i$ may be SSS receive power of an i-th CDB, and i may be 1 to 4.

The receiver may obtain an optimal SSS CDB index based on the SSS receive power of the CDB. An optimal SSS code division beam index may be an index of the CDB with a largest SSS receive power in the CDB. The optimal SSS code division bema index may be represented as in Equation 24 below.

[Equation 24]

$$Optimal\ CDB\ index = \arg\max_i p_i = \arg\max_i \sum_{n=0}^{L_{SSS}-1} |r_i(n)|^2$$

In addition, the receiver may obtain a total receive power of the SSS based on the SSS receive powers of the CDBs. The receiver may obtain the total receive power of the SSS based on Equation 25 below.

[Equation 25]

$$p_{SSS} = \sum_{i=1}^{N_{CDB}} p_i$$

In Equation 25, $p_{SSS}$ may be the total receive power of the SSS.

According to the present disclosure, the transmit transmits a plurality of code-division synchronization signal beams to the receiver at the same time by using the same frequency resource, and the receiver may separate the plurality of synchronization signal beams in a code domain to transmit optimal beam information to the transmitter, so as to form an optimal beam for data transmission and reception while reducing time and frequency resources required for synchronization signal transmission. According to the present disclosure, the receiver may save time and energy for detecting a synchronization signal beam.

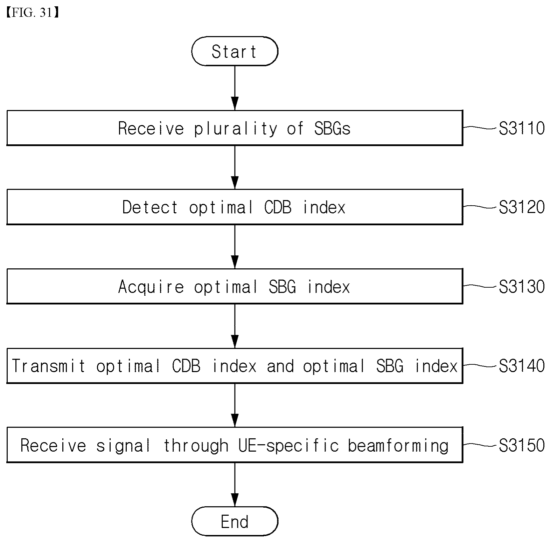

FIG. 31 is a flowchart of a signal transmission/reception method according to an embodiment of the present disclosure.

In FIG. 31, the UE may correspond to the receiver described above, and the base station may correspond to the transmitter.

Referring to FIG. 31, the UE may receive a plurality of SBGs from the base station (S3110). The UE may receive the plurality of SB Gs from the base station through an SS beam and a plurality of CDB beams corresponding to each of the plurality of SBGs. Here, the plurality of SBGs may include one PSS, one PBCH, and a plurality of code division SSSs.

In an embodiment, the UE may receive the PSS and the PBCH from the base station through one SS beam, and receive the plurality of code division SSSs from the base station through a plurality of CDBs.

In another embodiment, the UE may receive the PSS, the PBCH and the plurality of code division SSSs from the base station through the plurality of CDBs.

The UE may detect an optimal CDB index (S3120). The UE may detect the optimal CDB index corresponding to the optimal CDB from among the plurality of CDBs. The UE may obtain a receive power of each of the plurality of code division SSSs, and detect an index of an SSS having a largest receive power among the plurality of code division SSSs as the optimal CDB index.

The UE may obtain an optimal SBG index (S3130). For example, the UE may decode, from a PBCH included in the optimal SBG, an optimal SBG index of an optimal SBG to which an optimal SSS corresponding to the optimal CDB belongs.

The UE may transmit the optimal CDB index and the optimal SBG index to the base station (S3140).

The UE may receive a signal from the base station (S3150). The UE may receive a signal from the base station through optimized UE-specific beamforming based on the optimal CDB index and the optimal SBG index.

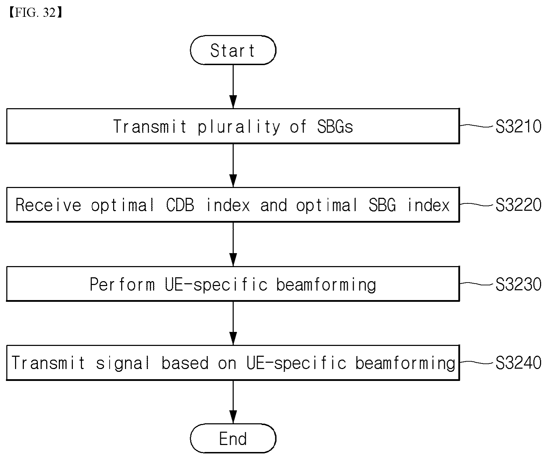

FIG. 32 is a flowchart of a signal transmission/reception method according to another embodiment of the present disclosure.

In FIG. 32, the UE may correspond to the receiver described above, and the base station may correspond to the transmitter.

Referring to FIG. 32, the base station may transmit a plurality of SBGs to the UE (S3210). The base station may transmit SS beams and a plurality of CDB beams corresponding to the plurality of SBGs, respectively. Here, the plurality of SBGs may include one PSS, one PBCH, and a plurality of code division SSSs.

In an embodiment, the base station may transmit the PSS and the PBCH to the UE through one SS beam, and transmit the plurality of code division SSSs from the base station through a plurality of CDBs. In this case, the base station may perform power boosting on the PSS and the PBCH.

In another embodiment, the base station may transmit the PSS, the PBCH and the plurality of code division SSSs to the UE through the plurality of CDBs.

The base station may receive the optimal CDB index and the optimal SBG index from the UE (S3220). The base station may perform UE-specific beamforming based on the optimal CDB index and the optimal SBG index (S3230). The base station may transmit a signal to the UE based on the UE-specific beamforming (S3240).

The contents described above may be applied in combination with embodiments proposed in the present disclosure to be described below or may be supplemented to clarify technical features of the embodiments proposed in the present disclosure. Embodiments to be described below are just distinguished for convenience of description and it is needless to say that some components of any one embodiment may be substituted with some components of another embodiment or may be applied in combination with each other.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Claims**

1. A method performed by a user equipment (UE) in a wireless communication system, the method comprising:

   receiving a plurality of synchronization beam groups (SBGs) from a base station (BS) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs);
   detecting an optimal CDB index corresponding to an optimal CDB from among the plurality of CDBs;
   acquiring an optimal SBG index of an optimal SBG to which the optimal CDB belongs;
   transmitting the optimal CDB index and the optimal SBG index to the BS; and
   receiving a signal from the BS through optimized UE-specific beamforming based on the optimal CDB index and the optimal SBG index.

2. The method of claim 1, wherein the PSS and the PBCH are received via one SS beam, and the plurality of respective SSSs are received via the plurality of respective CDBs.

3. The method of claim 1, wherein the PSS, the PBCH, and the plurality of SSSs are received via the plurality of CDBs.

4. The method of claim 1, wherein the detecting of the optimal CDB index corresponding to the optimal CDB from among the plurality of CDBs comprises:

   obtaining received power of each of the plurality of code division SSSs; and
   detecting an index of an SSS with a largest received power among the plurality of code division SSSs as the optimal CDB index.

5. A user equipment (UE) operating in a communication system, the UE comprising:

   one or more transceivers;
   one or more processors controlling the one or more transceivers; and
   a memory including one or more instructions performed by the one or more processors,
   wherein the one or more instructions comprise:

   receiving a plurality of synchronization beam groups (SBGs) from a base station (BS) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs);
   detecting an optimal CDB index corresponding to an optimal CDB from among the plurality of CDBs;
   acquiring an optimal SBG index of an optimal SBG to which the optimal CDB belongs;
   transmitting the optimal CDB index and the optimal SBG index to the BS; and
   receiving a signal from the BS through optimized UE-specific beamforming based on the optimal CDB index and the optimal SBG index.

6. The UE of claim 5, wherein the PSS and the PBCH are received via one SS beam, and the plurality of respective SSSs are received via the plurality of respective CDBs.

7. The UE of claim 5, wherein the PSS, the PBCH, and the plurality of SSSs are received via the plurality of CDBs.

8. The UE of claim 5, wherein the detecting of the optimal CDB index corresponding to the optimal CDB from among the plurality of CDBs comprises:

   obtaining received power of each of the plurality of code division SSSs; and
   detecting an index of an SSS with a largest received power among the plurality of code division SSSs as the optimal CDB index.

9. A method performed by a base station (BS) in a wireless communication system, the method comprising:

   transmitting a plurality of synchronization beam groups (SBGs) to a user equipment (UE) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs);
   receiving, from the UE, an optimal CDB index corresponding to an optimal CDB among a plurality of CDBs and an optimal SBG index of an optimal SBG to which the optimal CDB belongs;
   performing optimized UE-specific beamforming based on the optimal CDB index and the optimal SBG index; and
   transmitting a signal to the UE based on the UE-specific beamforming.

10. The method of claim 9, wherein the transmitting of the plurality of SBGs to the UE through at least one of the plurality of CDBs or the SS beams corresponding to the plurality of SBGs, respectively comprises:

   transmitting the PSS and the PBCH to the UE via one SS beam; and

transmitting the plurality of SSSs via the plurality of CDBs.

11. The method of claim 10, wherein the transmitting of the PSS and the PBCH to the UE via one SS beam comprises performing power-boosting for the PSS and the PBCH.

12. The method of claim 9, wherein the transmitting of the plurality of SBGs to the UE through at least one of the plurality of CDBs or the SS beams corresponding to the plurality of SBGs, respectively comprises transmitting the PSS, the PBCH, and the plurality of SSSs via the plurality of CDBs.

13. A base station (BS) operating in a communication system, the base station comprising:

   one or more transceivers;
   one or more processors controlling the one or more transceivers; and
   a memory including one or more instructions performed by the one or more processors,
   wherein the one or more instructions comprise:

      transmitting a plurality of synchronization beam groups (SBGs) to a user equipment (UE) through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs);
      receiving, from the UE, an optimal CDB index corresponding to an optimal CDB among a plurality of CDBs and an optimal SBG index of an optimal SBG to which the optimal CDB belongs;
      performing optimized UE-specific beamforming based on the optimal CDB index and the optimal SBG index; and
      transmitting a signal to the UE based on the UE-specific beamforming.

14. The base station of claim 13, wherein the transmitting of the plurality of SBGs to the UE through at least one of the plurality of CDBs or the SS beams corresponding to the plurality of SBGs, respectively comprises:

   transmitting the PSS and the PBCH to the UE via one SS beam; and
   transmitting the plurality of SSSs via the plurality of CDBs.

15. The base station of claim 14, wherein the transmitting of the PSS and the PBCH to the UE via one SS beam comprises performing power-boosting for the PSS and the PBCH.

16. The base station of claim 13, wherein the transmitting of the plurality of SBGs to the UE through at least one of the plurality of CDBs or the SS beams corresponding to the plurality of SBGs, respectively comprises transmitting the PSS, the PBCH, and the plurality of SSSs via the plurality of CDBs.

17. A first device comprising:

   one or more memories; and
   one or more processors operably connected to the one or more memories,
   wherein the first device operates to:

      receive a plurality of synchronization beam groups (SBGs) from a second device through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs);
      detect an optimal CDB index corresponding to an optimal CDB from among the plurality of CDBs;
      acquire an optimal SBG index of an optimal SBG to which the optimal CDB belongs;
      transmit the optimal CDB index and the optimal SBG index to the second device; and
      receive a signal from the second device through optimized UE-specific beamforming based on the optimal CDB index and the optimal SBG index.

18. One or more non-transitory computer readable media storing one or more instructions, wherein the one or more non-transitory computer readable media operate to:

receive a plurality of synchronization beam groups (SBGs) from a second device through at least one of a plurality of code division beams (CDBs) or synchronization signal (SS) beams corresponding to the plurality of SBGs, respectively, wherein each of the plurality of SBGs includes one primary SS (PSS), one physical broadcast channel (PBCH), and a plurality of code division secondary SSs (SSSs);

detect an optimal CDB index corresponding to an optimal CDB from among the plurality of CDBs;

acquire an optimal SBG index of an optimal SBG to which the optimal CDB belongs;

transmit the optimal CDB index and the optimal SBG index to the second device; and

receive a signal from the second device through optimized UE-specific beamforming based on the optimal CDB index and the optimal SBG index.

【FIG.1】

【FIG.2】

【FIG.3】

【FIG.4】

Device(400)

Communication unit(410)
(e.g., 5G communication unit)

Communication circuit(412)
(e.g., processor(s),memory(s))

Transceiver(s)(414)
(e.g., RF unit(s),antenna(s))

Control unit(420)
(e.g., processor(s))

Memory unit(430)
(e.g., RAM, storage)

Additional components(440)
(e.g., power unit/battery,
I/O unit,driving unit,
computing unit)

【FIG.5】

【FIG. 6】

EP 4 693 920 A1

【FIG.7】

【FIG.8】

Resource grid

A
carrier

A BWP

1RB

1 RE

1
subcarrier

1 symbol

l=0 ・・・

k=0

[FIG. 9]

【FIG.10】

【FIG.11】

Input Layer      Hidden Layer      Output Layer

Input-Hidden
Weight
$W^{d \times H}$

Hidden-Output
Weight
$W^{H \times K}$

【FIG.12】

【FIG.13】

Input Layer      Hidden Layer      Output Layer

Input-Hidden
Weight
$W^{h \times w \times h \times w}$

Hidden-Output
Weight
$W^{h \times w \times h \times w}$

【FIG.14】

$3 \times 3$
Filter

Weight
Product

Sum

Activation
Function

$W^{3 \times 3}$

$\sigma(\cdot)$

【FIG.15】

Output
Layer

$s_1^{(t)}$  $s_2^{(t)}$  $\cdots$  $s_K^{(t)}$

Hidden-Output
Weight
$W^{H \times K}$

Hidden
Layer

$+1$  $z_1^{(t)}$  $z_2^{(t)}$  $\cdots$  $z_j^{(t)}$  $\cdots$  $z_H^{(t)}$

Input-Hidden
Weight
$W^{d \times H}, W^{H \times H}$

Input
Layer

$+1$  $x_1^{(t)}$  $x_2^{(t)}$  $\cdots$  $x_i^{(t)}$  $\cdots$  $x_d^{(t)}$  $z_1^{(t-1)}$  $z_2^{(t-1)}$  $\cdots$  $z_H^{(t-1)}$

**【FIG. 16】**

【FIG. 17】

EP 4 693 920 A1

【FIG.18】

THz SMALL CELLS

THz BACKHAUL LINK

BACKHAUL COMMUNICATION

VEHICULAR COMMUNICATION

THz DATA CENTRE NETWORK

THZ KIOSK DOWNLOADING

45

[FIG. 19]

【FIG. 20】

【FIG. 21】

AWG

EDFA

$f_0$

IQ mod

$f_0 - f_{RF}$

PD

RF amp

OSA

Plasmonic mixer

DSO

EDFA

PD PD

90° Hybrid

$f_0$

$f_0 - f_{RF}$

EDFA

——— Optical fiber
- - - - Electrical
——— Wireless

[FIG. 22]

Data signal Generator

Optical Modulator

Optical RF signal Generator

OFCG:optical frequency comb generator

OAF

Primarily non-linear element

O/E Converter

AF

Antenna

【FIG. 23】

Microwave contact

Optical waveguide

x-cut          z-cut

(a)

Dual-drive
hot    hot

hot

Optical waveguide

x-cut          z-cut

(b)

Phase modulator

Laser

OPA

O/E Converter serving as an optical mixer

Modulated signal

Data(E)

(c)

Intensity modulator

Laser

OPA

O/E Converter serving as an optical mixer

Modulated signal

Data(E)

(d)

EP 4 693 920 A1

【FIG. 24】

SBG sweeping

SBG 1
@$t_1$

SBG 2
@$t_2$

SBG 3
@$t_3$

SBG $N_{SBG}$
@$t_{N_{SBG}}$

CDB
2

CDB
$N_{CDB}$

【FIG. 25】

Transmitter                                                      Receiver

                                                    S2510
                        SBG

                                                                S2520

                                            Obtain SBG index
                                             and CDB index

                                                    S2530
            Receive SBG index and CDB index

    S2540

    Perform optimized
    UE-specific beamforming

                                                    S2550
                    Transmit signal

【FIG. 26】

PSS/PBCH beam

SSS beam 1

SSS beam 2

SSS beam 3                    SBG

SSS beam 4

【FIG. 27】

Antenna Array of Sub-Arrays

Analog Beamforming (Phase Shifters)

IFFT

Resource Mapping

$s(n)$, $n=0,1,\cdots,L_{SSS}-1$

SSS Sequence(Length=$L_{SSS}$)
$d_{SSS}(n)$, $n=0,1,\cdots,L_{SSS}-1$

$u(n)$, $n=0,1,\cdots,L_{SSS}-1$

$N_{SF}$ up-sampling

$N_{SF} = \dfrac{L_{SSS}}{L_{Walsh}}$

$c$

$\alpha = \sqrt{\dfrac{G_{Tx,SSS}}{G_{Tx,PSS}}}$

Digital Beamforming (Precoders)

$W_1$   $W_2$   $W_3$   $W_4$

PSS/PBCH   $x_1$   $x_2$   $x_3$   $x_4$

Walsh Codes(Length=$L_{Walsh}$)

【FIG. 28】

SS+PBCH beam 1

SS+PBCH beam 2

SS+PBCH beam 3

SS+PBCH beam 4

SBG

[FIG. 29]

Antenna Array of Sub-Arrays

Analog
Beamforming
(Phase Shifters)

IFFT

Resource Mapping

$z_{PSS} + z_{SSS} + z_{PBCH}$

Digital
Beamforming
(Precoders)

$w_1$  $w_2$  $w_3$  $w_4$

PSS/PBCH

$s_1$  $s_2$  $s_3$  $s_4$

SSS Sequence(Length=$L_{SSS}$)
$d_{SSS}(n)$, $n = 0, 1, \cdots, L_{SSS}-1$

$u_1$  $u_2$  $u_3$  $u_4$

$N_{SF}$ up-sampling  $N_{SF}$ up-sampling  $N_{SF}$ up-sampling  $N_{SF}$ up-sampling

$$N_{SF} = \frac{L_{SSS}}{L_{Walsh}}$$

$x_1$  $x_2$  $x_3$  $x_4$

Walsh Codes(Length=$L_{Walsh}$)

【FIG. 30】

Receiver Antenna

FFT

Resource Demapping

$r(n), \ n=0,1,\cdots,L_{SSS}-1$

SSS Sequence(Length=$L_{SSS}$)
$d_{SSS}(n), \ n=0,1,\cdots,L_{SSS}-1$

$u_1$ | $N_{SF}$ up-sampling
$u_2$ | $N_{SF}$ up-sampling
$u_3$ | $N_{SF}$ up-sampling
$u_4$ | $N_{SF}$ up-sampling

$r_1$  $r_2$  $r_3$  $r_4$

$\sum |r_1|^2$  $x_1$  $\sum |r_2|^2$  $x_2$  $\sum |r_3|^2$  $x_3$  $\sum |r_4|^2$  $x_4$

$p_1$  $p_2$  $p_3$  $p_4$

$$N_{SF} = \frac{L_{SSS}}{L_{Walsh}}$$

Peak detection

CDB index

【FIG. 31】

```
                    ┌─────────┐
                    │  Start  │
                    └─────────┘
                         │
                         ▼
┌──────────────────────────────────────────┐
│       Receive plurality of SBGs          │───S3110
└──────────────────────────────────────────┘
                         │
                         ▼
┌──────────────────────────────────────────┐
│         Detect optimal CDB index         │───S3120
└──────────────────────────────────────────┘
                         │
                         ▼
┌──────────────────────────────────────────┐
│         Acquire optimal SBG index        │───S3130
└──────────────────────────────────────────┘
                         │
                         ▼
┌──────────────────────────────────────────┐
│ Transmit optimal CDB index and optimal SBG index │───S3140
└──────────────────────────────────────────┘
                         │
                         ▼
┌──────────────────────────────────────────┐
│ Receive signal through UE-specific beamforming │───S3150
└──────────────────────────────────────────┘
                         │
                         ▼
                    ┌─────────┐
                    │   End   │
                    └─────────┘
```

【FIG. 32】

```
                    ┌───────────┐
                    │   Start   │
                    └─────┬─────┘
                          │
                          ▼
┌──────────────────────────────────────────────┐
│         Transmit plurality of SBGs           │───S3210
└──────────────────────┬───────────────────────┘
                       │
                       ▼
┌──────────────────────────────────────────────┐
│  Receive optimal CDB index and optimal SBG index │───S3220
└──────────────────────┬───────────────────────┘
                       │
                       ▼
┌──────────────────────────────────────────────┐
│         Perform UE-specific beamforming       │───S3230
└──────────────────────┬───────────────────────┘
                       │
                       ▼
┌──────────────────────────────────────────────┐
│ Transmit signal based on UE-specific beamforming │───S3240
└──────────────────────┬───────────────────────┘
                       │
                       ▼
                    ┌───────────┐
                    │    End    │
                    └───────────┘
```

## INTERNATIONAL SEARCH REPORT

| International application No. |
|---|
| **PCT/KR2023/003951** |

| A. | CLASSIFICATION OF SUBJECT MATTER |
|---|---|

**H04B 7/0408**(2017.01)i; **H04B 7/06**(2006.01)i; **H04B 7/08**(2006.01)i; **H04W 56/00**(2009.01)i; **H04J 11/00**(2006.01)i

According to International Patent Classification (IPC) or to both national classification and IPC

| B. | FIELDS SEARCHED |
|---|---|

Minimum documentation searched (classification system followed by classification symbols)

H04B 7/0408(2017.01); H04B 7/26(2006.01); H04W 16/28(2009.01); H04W 56/00(2009.01); H04W 72/00(2009.01); H04W 76/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동기 신호 빔 그룹(synchronization beam group), 코드 분할 빔(code division beam), 최적화된 단말 특정 빔포밍(optimized UE-specific beamforming), 인덱스(index)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018-084624 A1 (SAMSUNG ELECTRONICS CO., LTD.) 11 May 2018 (2018-05-11)<br>See paragraphs [0148], [0156] and [0198]; claim 1; and figures 21-22. | 1-18 |
| A | US 7602760 B2 (ZEIRA, Eldad) 13 October 2009 (2009-10-13)<br>See column 4, lines 60-64 and column 5, lines 1-2 and 28-30; and figure 7. | 1-18 |
| A | KR 10-2019-0123863 A (ELECTRONICS AND TELECOMMUNICATIONS RESEARCH INSTITUTE) 04 November 2019 (2019-11-04)<br>See paragraphs [0026]-[0029]; claim 1; and figure 2. | 1-18 |
| A | KR 10-2022-0044221 A (QUALCOMM INCORPORATED) 06 April 2022 (2022-04-06)<br>See paragraphs [0048]-[0051]; claim 1; and figure 7. | 1-18 |
| A | SHAFIN, Rubayet et al. Self-Tuning Sectorization: Deep Reinforcement Learning Meets Broadcast Beam Optimization. arXiv:1906.06021v1. 14 June 2019, pp. 1-30.<br>[Retrieved on 04 December 2023]. Retrieved from <https://arxiv.org/pdf/1906.06021.pdf>.<br>See pages 22-23; and figure 8. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 December 2023** | **12 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

**INTERNATIONAL SEARCH REPORT**
Information on patent family members

</div>

| International application No. |
| --- |
| **PCT/KR2023/003951** |

| Patent document cited in search report | | | Publication date (day/month/year) | Patent family member(s) | | | Publication date (day/month/year) |
| --- | --- | --- | --- | --- | --- | --- | --- |
| WO | 2018-084624 | A1 | 11 May 2018 | EP | 3522394 | A1 | 07 August 2019 |
| | | | | EP | 3522394 | A4 | 10 June 2020 |
| | | | | KR | 10-2018-0049762 | A | 11 May 2018 |
| | | | | US | 11096115 | B2 | 17 August 2021 |
| | | | | US | 2019-0281534 | A1 | 12 September 2019 |
| US | 7602760 | B2 | 13 October 2009 | AU | 2003-234428 | A1 | 11 November 2003 |
| | | | | CA | 2485961 | A1 | 20 November 2003 |
| | | | | CN | 1672348 | A | 21 September 2005 |
| | | | | EP | 1529357 | A2 | 11 May 2005 |
| | | | | EP | 1529357 | A4 | 07 April 2010 |
| | | | | JP | 2005-525756 | A | 25 August 2005 |
| | | | | JP | 2007-236009 | A | 13 September 2007 |
| | | | | JP | 4388888 | B2 | 24 December 2009 |
| | | | | KR | 10-0700995 | B1 | 30 March 2007 |
| | | | | KR | 10-2004-0108815 | A | 24 December 2004 |
| | | | | KR | 10-2005-0090477 | A | 13 September 2005 |
| | | | | KR | 10-2008-0058480 | A | 25 June 2008 |
| | | | | TW | 201004183 | A | 16 January 2010 |
| | | | | TW | I493914 | B | 21 July 2015 |
| | | | | US | 2010-0056168 | A1 | 04 March 2010 |
| | | | | US | 2012-0076031 | A1 | 29 March 2012 |
| | | | | US | 9380588 | B2 | 28 June 2016 |
| | | | | WO | 03-096710 | A2 | 20 November 2003 |
| | | | | WO | 2003-09671 | 0 | 17 March 2005 |
| KR | 10-2019-0123863 | A | 04 November 2019 | KR | 10-2503793 | B1 | 24 February 2023 |
| KR | 10-2022-0044221 | A | 06 April 2022 | BR | 112019017325 | A2 | 31 March 2020 |
| | | | | CA | 3049897 | A1 | 30 August 2018 |
| | | | | CN | 110326245 | A | 11 October 2019 |
| | | | | CN | 110326245 | B | 15 July 2022 |
| | | | | CN | 110326246 | A | 11 October 2019 |
| | | | | CN | 110326246 | B | 05 November 2021 |
| | | | | EP | 3586464 | A1 | 01 January 2020 |
| | | | | EP | 3586464 | B1 | 20 July 2022 |
| | | | | EP | 3586465 | A1 | 01 January 2020 |
| | | | | EP | 3586465 | B1 | 06 September 2023 |
| | | | | EP | 3961963 | A1 | 02 March 2022 |
| | | | | JP | 2020-511053 | A | 09 April 2020 |
| | | | | JP | 6808847 | B2 | 06 January 2021 |
| | | | | KR | 10-2019-0117544 | A | 16 October 2019 |
| | | | | KR | 10-2020-0111827 | A | 29 September 2020 |
| | | | | KR | 10-2023-0004897 | A | 06 January 2023 |
| | | | | KR | 10-2217698 | B1 | 18 February 2021 |
| | | | | KR | 10-2382897 | B1 | 04 April 2022 |
| | | | | TW | 201836429 | A | 01 October 2018 |
| | | | | TW | I721244 | B | 11 March 2021 |
| | | | | US | 10568102 | B2 | 18 February 2020 |
| | | | | US | 10582504 | B2 | 03 March 2020 |
| | | | | US | 11057893 | B2 | 06 July 2021 |
| | | | | US | 11616614 | B2 | 28 March 2023 |
| | | | | US | 2018-0241605 | A1 | 23 August 2018 |

Form PCT/ISA/210 (patent family annex) (July 2022)

### INTERNATIONAL SEARCH REPORT
**Information on patent family members**

International application No.

**PCT/KR2023/003951**

| Patent document cited in search report | Publication date (day/month/year) | Patent family member(s) | | Publication date (day/month/year) |
|---|---|---|---|---|
| | | US | 2018-0242324 A1 | 23 August 2018 |
| | | US | 2020-0037327 A1 | 30 January 2020 |
| | | US | 2021-0329638 A1 | 21 October 2021 |
| | | WO | 2018-156300 A1 | 30 August 2018 |
| | | WO | 2018-156301 A1 | 30 August 2018 |

Form PCT/ISA/210 (patent family annex) (July 2022)